# EUROPÄISCHE PATENTSCHRIFT

(11) **EP 2 842 474 B1**
(45) Veröffentlichungstag und Bekanntmachung des Hinweises auf die Patenterteilung: **13.07.2016**
(21) Anmeldenummer: 14180029.2
(22) Anmeldetag: 06.08.2014
(51) Int. Cl.: A47L 15/00, A47L 15/42, D06F 39/04

(54) **Wasserführendes Haushaltsgerät mit einer Heizeinrichtung**
Water-bearing household device with a heating device
Appareil ménager utilisant de l'eau doté d'un dispositif de chauffage

(30) Priorität: 29.08.2013 DE 102013217276
(43) Veröffentlichungstag der Anmeldung: 04.03.2015
(73) Patentinhaber: BSH Hausgeräte GmbH, 81739 München (DE)
(72) Erfinder: Gerstmeier, Ulrich, 89344 Aislingen (DE); Lutz, Stephan, 86637 Zusamaltheim (DE); Wecker, Markus, 89355 Gundremmingen (DE)

(56) Entgegenhaltungen:
- EP-A1- 1 865 100
- DE-A1-102011 002 861

## Beschreibung

Die Erfindung betrifft ein wasserführendes Haushaltsgerät, insbesondere eine Haushaltsgeschirrspülmaschine, mit einer Heizeinrichtung, insbesondere mit einer Heizpumpe, zum Erwärmen einer wasserhaltigen Flüssigkeit, insbesondere einer wasserhaltigen Spülflüssigkeit, welche eine Wandung, insbesondere aus Edelstahl, aufweist, wobei eine erste Seite der Wandung mit einer Heizwiderstandsanordnung sowie mit einer von der Heizwiderstandsanordnung beabstandeten Temperaturmessanordnung zur Messung wenigstens einer Temperatur der Wandung ausgerüstet ist, und wobei eine gegenüberliegende zweite Seite der Wandung zum Führen der Flüssigkeit vorgesehen ist,

Weiterhin betrifft die Erfindung ein Verfahren zum Betreiben eines wasserführendes Haushaltsgeräts, insbesondere eines erfindungsgemäßen Haushaltsgerätes, mit einer Heizeinrichtung, insbesondere eine Heizpumpe, zum Erwärmen einer wasserhaltigen Flüssigkeit, insbesondere einer Spülflüssigkeit, welche eine Wandung, insbesondere aus Edelstahl, aufweist, wobei eine erste Seite der Wandung mit einer Heizwiderstandsanordnung sowie mit einer von der Heizwiderstandsanordnung beabstandeten Temperaturmessanordnung zur Messung wenigstens einer Temperatur der Wandung ausgerüstet ist, und wobei eine gegenüberliegende zweite Seite der Wandung zum Führen der Flüssigkeit vorgesehen ist.

Ein derartiges Haushaltsgerät ist z.B. aus der DE 10 2011 002 861 A1 bekannt. Dabei ist vorgesehen, dass die gemessene Temperatur mit einem Grenzwert verglichen wird, bei dessen Überschreitung die Heizeinrichtung abgeschaltet wird, um so Schäden durch eine Überhitzung zu vermeiden.

Nachteilig bei einem derartigen Haushaltsgerät ist es, dass die Gefahr einer Überhitzung nicht vor ihrem Eintritt erkennbar ist, so dass auch keine Maßnahmen gegen eine drohende Überhitzung getroffen werden können.

Aufgabe der Erfindung ist es, ein Haushaltsgerät und ein Verfahren zu dessen Betrieb zu schaffen, bei welchem eine Gefahr einer Überhitzung bereits vor ihrem Eintritt erkannt werden kann.

Die Aufgabe wird bei einer Geschirrspülmaschine der eingangs genannten Art dadurch gelöst, dass auf der zweiten Seite der Wandung gegenüberliegend der Temperaturmessanordnung ein Kalkanlagerungsbereich ausgebildet ist, der eine höhere Neigung zur Anlagerung von in der Flüssigkeit enthaltenem Kalk aufweist als ein übriger Bereich der zweiten Seite, und dass eine Kalkerkennungseinrichtung zur Erkennung einer Anlagerung von Kalk an dem Kalkanlagerungsbereich anhand der mindestens einen Temperatur vorgesehen ist

Die Erfindung wird im Folgenden am Beispiel einer Haushaltsgeschirrspülmaschine erläutert. Die Erfindung könnte aber auch beispielsweise bei einer Haushaltswaschmaschine angewandt werden.

Bei modernen Geschirrspülmaschinen wird das zu spülende Reinigungsgut, insbesondere Geschirr, in einen Spülbehälter eingebracht und dort in einem Spülprozess, der auch Spülgang genannt wird, unter Zuhilfenahme einer wasserhaltigen Flüssigkeit gereinigt und anschließend getrocknet.

Bei den heutigen Geschirrspülmaschinen ist in aller Regel eine Steuereinrichtung vorgesehen, welche einen Spülgang nach einem üblicherweise auswählbaren Spülprogramm automatisch steuert und/oder regelt. Sie kann insbesondere als Ablaufsteuerung ausgebildet sein, die Aktoren und/oder sonstige Komponenten der Geschirrspülmaschine steuernd und/oder regelnd beeinflusst, vorzugsweise kontrolliert. Ein Spülprogramm weist mehrere aufeinanderfolgende Programmschritte zur Behandlung des Spülguts auf, wobei die wasserhaltige Flüssigkeit in den wasserführenden Programmschritten in Abhängigkeit von dem jeweiligen Programmschritt mit Reinigungs- und/oder Zusatzstoffen versehen und auf eine für den jeweiligen Programmschritt günstige Temperatur gebracht wird.

Ein typisches Spülprogramm umfasst zur Reinigung des Spülguts in dieser Reihenfolge einen Vorspülschritt, einen Reinigungsschritt, einen Zwischenspülschritt und einen Klarspülschritt, bei denen das Spülgut jeweils mit wasserhaltiger Flüssigkeit beaufschlagt wird. Weiterhin umfasst ein typisches Spülprogramm einen sich daran anschließenden Trocknungsschritt zum Trocknen des gereinigten Geschirrs. Es können jedoch auch Spülprogramme vorgesehen sein, bei denen einer oder mehrere dieser Schritte ausgeblendet sind. Auch sind Spülprogramme möglich, bei denen einer oder mehrere dieser Schritte mehrfach durchlaufen werden.

Das zur Durchführung von Spülgängen erforderliche Frischwasser kann bei bekannten Geschirrspülmaschinen über ein durch die Steuereinrichtung steuerbares und/oder regelbares Zulaufventil aufgenommen werden, welche Frischwasser beispielsweise von einer gebäudeseitig installierten Wasserversorgung aufnehmen kann. Um die zum Spülen vorgesehene wasserhaltige Flüssigkeit mit den vorgesehenen Reinigungs- und/oder Zusatzstoffen versehen zu können, weisen moderne Geschirrspülmaschinen üblicherweise durch die Steuereinrichtung automatisch steuerbare Dosiereinrichtungen auf.

Geschirrspülmaschinen, insbesondere Haushaltsgeschirrspülmaschinen, weisen eine durch die Steuereinrichtung steuerbare und/oder regelbare Umwälzpumpe auf, die vorgesehen ist, wasserhaltige Flüssigkeit, die üblicherweise als Spülflüssigkeit oder als Spülflotte bezeichnet wird, über ein oder mehrere Sprühvorrichtungen auf das zu spülende Geschirr aufzubringen. Dabei kann insbesondere vorgesehen sein, dass die Spülflüssigkeit z.B. abwechselnd oder in sonstiger Weise selektiv zu verschiedenen Sprühvorrichtungen gefördert werden soll, weshalb Geschirrspülmaschinen gegebenenfalls einen Verteiler, bevorzugt eine Wasserweiche aufweisen, die so eingerichtet sein kann, dass die Spülflüssigkeit abwechselnd zu den Sprühvorrichtungen geleitet wird. Mit einem solchen Verteiler kann also verallgemeinert ausgedrückt die Flüssigkeitszufuhr zu mehreren Sprüheinrichtungen selektiv oder gleichzeitig unterbrochen, gedrosselt oder geöffnet werden.

Weiterhin können Geschirrspülmaschinen eine üblicherweise elektrische durch die Steuereinrichtung steuerbare Heizeinrichtung aufweisen, um die zum Spülen vorgesehene Flüssigkeit auf die erforderlichen Temperaturen zu bringen. Eine derartige Heizeinrichtung umfasst typischerweise eine insbesondere aus Edelstahl gefertigte Wandung, wobei eine erste Seite der Wandung mit einer Heizwiderstandsanordnung ausgerüstet ist, und wobei eine gegenüberliegende zweite Seite der Wandung zum Führen der Flüssigkeit vorgesehen ist. Auf diese Weise ist es möglich, die von der Heizwiderstandsanordnung erzeugte Wärme über die Wandung auf die Flüssigkeit zu übertragen. Die Heizwiderstandsanordnung kann insbesondere in Flachleitertechnik, bevorzugt in Dickschichttechnik, ausgeführt sein.

Weiterhin kann die erste Seite der Wandung mit einer von der Heizwiderstandsanordnung beabstandeten Temperaturmessanordnung zur Messung wenigstens einer Temperatur der Wandung ausgerüstet sein. Mittels der Temperaturmessanordnung ist es dann möglich, eine Überhitzung der Heizeinrichtung zu erkennen und diese gegebenenfalls abzuschalten, um größere Schäden an der Geschirrspülmaschine und/oder am Reinigungsgut zu vermeiden.

Nach einer weiteren vorteilhaften Weiterbildung kann die Wandung der Heizeinrichtung insbesondere rohrförmig ausgebildet sein kann. Typischerweise ist dann die Heizwiderstandsanordnung und die Temperaturmessanordnung auf der Außenseite der rohrförmigen Wandung angeordnet, wobei die wasserhaltige Flüssigkeit auf der Innenseite der rohrförmigen Wandung geführt wird, d.h. die zu erwärmende Flüssigkeit fließt durch ein Rohr hindurch, das auf seiner trockenen Außenmantelfläche die Heizwiderstandsanordnung und die Temperaturmessanordnung aufweist.

Insbesondere kann es zweckmäßig sein, wenn die elektrische Heizeinrichtung in die Umwälzpumpe integriert ist. Eine Umwälzpumpe mit integrierter Heizeinrichtung wird auch Heizpumpe genannt. Diese ist in vorteilhafter Weise kompakt ausgebildet und erwärmt die jeweilig aufzuheizende Flüssigkeit energieeffizient.

Bekanntermaßen ist ein hoher Kalk- und/oder Magnesiumgehalt des in der Geschirrspülmaschine zur Beaufschlagung von Spülgut vorgesehenen Wassers nachteilig für das Spülergebnis, da sich der Kalk am Spülgut absetzen und dadurch insbesondere bei gläsernem Spülgut unerwünschte Trübungen verursachen kann. Bei bekannten Geschirrspülmaschinen wird daher das mit dem Zulaufventil aufgenommene Wasser zunächst über einer Enthärtungseinrichtung zur Enthärtung bzw. Entkarbonisierung von Wasser geführt, bevor es für einen Spül- oder Klarspülvorgang verwendet wird. Die Enthärtungseinrichtung umfasst dabei in aller Regel einen Ionentauscher zum Enthärten und/oder Entsalzen von Wasser und eine Wartungs bzw. Regeneriereinrichtung zum Warten bzw. Regenerieren des Ionentauschers.

Der Ionentauscher enthält ein Harz mit der Eigenschaft, die im Wasser gelösten Kalziumionen bzw. Magnesiumionen zu sorbieren, wodurch der Kalkgehalt des Wassers reduziert wird. Um das Harz des Ionentauschers wieder von dem sorbierten Kalk zu befreien, ist eine Regeneriereinrichtung vorgesehen, welche zur automatischen Regenerierung des Ionentauschers ausgebildet ist.

Die Regenerierung des Ionentauschers umfasst üblicherweise einen Regenerierschritt und einen Durchspülschritt. Beim Regenerierschritt wird dem Ionentauscher eine zuvor aus Wasser und Regeneriersalz zubereitete Regeneriersole zugeführt, die im Wesentlichen Natriumchlorid in wässriger Lösung enthält. Sobald diese Regeneriersole mit dem Harz des Ionentauschers in Kontakt kommt, werden die in der Regeneriersole enthaltenen Natriumionen anstelle der Kalziumionen bzw. Magnesiumionen von dem Harz sorbiert, während die Kalziumionen bzw. Magnesiumionen aus dem Harz in der mit Regeneriersalz versetzten Sole in Lösung gehen.

Die Regeneriersole wird dabei üblicherweise in einer Regeneriersoleeinrichtung zubereitet und bis zum Beginn des Regenerierschritts bereitgehalten. Von der Regeneriersoleeinrichtung wird die Regeneriersole dann zu Beginn des Regenerierschritts in den Ionentauscher geleitet. Nach Ablauf einer zur Regeneration des Ionentauschers erforderlichen Zeitspanne wird der Ionentauscher mit von dem Zulaufventil aufgenommenem Wasser in einem Durchspülschritt durchspült, um so die Regeneriersole aus dem Ionentauscher abzuführen, so dass der Ionentauscher wieder zur Enthärtung von Frischwasser zur Verfügung steht.

Bislang war es üblich, eine Regenerierung der Enthärtungseinrichtung periodisch nach einer vorgegebenen Anzahl von Spülgängen oder nach einer vorgegebenen Menge an aufgenommenem Frischwasser durchzuführen, wobei die Vorgabewerte anhand der am Betriebsort vorliegenden Wasserhärte festgelegt wurden. Hierzu musste der Bediener die Wasserhärte manuell an der Geschirrspülmaschine einstellen. Wurde dabei eine zu große Wasserhärte eingestellt, wurde unnötig oft regeneriert, was einen unnötigen Salz- und Wasserverbrauch zur Folge hatte. Wurde jedoch eine zu geringe Wasserhärte eingestellt, so wurde zu selten regeneriert, was nachteilig für das Spülergebnis der Geschirrspülmaschine ist und auf Dauer zu einer Verkalkung der Geschirrspülmaschine führte, was langfristig zu Schäden an der Geschirrspülmaschine, insbesondere durch Verstopfungen im Leitungssystem und durch Überhitzung der Heizeinrichtung, führen konnte.

Erfindungsgemäß ist nun vorgesehen, dass auf der zweiten Seite der Wandung gegenüberliegend der Temperaturmessanordnung ein Kalkanlagerungsbereich ausgebildet ist, der eine höhere Neigung zur Anlagerung von in der Flüssigkeit enthaltenem Kalk aufweist als ein übriger Bereich der zweiten Seite, und dass eine Kalkerkennungseinrichtung zur Erkennung einer Anlagerung von Kalk an dem Kalkanlagerungsbereich anhand der mindestens einen Temperatur vorgesehen ist.

Grundsätzlich lagert sich Kalk bevorzugt an heißen Oberflächen an. Bei einer Geschirrspülmaschine lagert sich der Kalk folglich üblicherweise im Bereich der Heizeinrichtung an. Durch die Ausbildung des Kalkanlagerungsbereichs wird nun sichergestellt, dass sich der in der wasserhaltigen Flüssigkeit befindliche Kalk zu allererst gegenüber der Temperaturmessanordnung anlagert. Da nun Kalk eine geringere Wärmeleitfähigkeit als typische Wandungsmaterialien, wie beispielsweise Edelstahl, aufweist, verändert sich bei einer Anlagerung von Kalk im Bereich des Kalkanlagerungsbereichs die Temperaturverteilung in der Wandung. So steigt die in einem bestimmten Abstand von der Heizwiderstandsanordnung an der ersten Seite der Wandung gemessene Temperatur bei der Anlagerung von Kalk im auf der zweiten Seite gegenüberliegenden Kalkanlagerungsbereich an. Die erfindungsgemäße Kalkerkennungseinrichtung ist nun so ausgebildet, dass sie eine Anlagerung von Kalk an dem Kalkanlagerungsbereich anhand der mindestens einen gemessenen Temperatur erkennt. Auf diese Weise ist eine beginnende Verkalkung der Geschirrspülmaschine frühzeitig erkennbar, so dass ein oder mehrere Gegenmaßnahmen getroffen werden können, bevor das Spülergebnis leidet oder die Geschirrspülmaschine gar beschädigt wird.

Nach einer vorteilhaften Weiterbildung der Erfindung weist der Kalkablagerungsbereich eine erste Oberflächenstruktur und der übrige Bereich eine zweite Oberflächenstruktur auf, wobei die erste Oberflächenstruktur so ausgebildet ist, dass sie im Vergleich zu der zweiten Oberflächenstruktur eine Anlagerung von Kalk stärker begünstigt. Unter einer Oberflächenstruktur wird dabei eine tatsächliche Struktur einer Oberfläche verstanden, welche gegenüber einer idealen glatten Oberfläche Gestaltabweichungen wie Rillen, Riefen, Schuppen, Kuppen und dergleichen aufweist. Dabei hat sich gezeigt, dass sich Kalk bevorzugt an solchen Oberflächen anlagert, welche tiefe und/oder wenig abgerundete Gestaltabweichungen aufweisen. Der vorgesehene Unterschied der ersten Oberflächenstruktur und der zweiten Oberflächenstruktur kann dadurch hergestellt werden, dass die Wandung, welche wenigstens an der zweiten Seite zunächst eine gleichmäßige Oberflächenstruktur aufweist, im Kalkanlagerungsbereich, beispielsweise durch Sandstrahlen oder Schleifen, so behandelt wird, dass die erste Oberflächenstruktur tiefere und/oder weniger abgerundete Gestaltabweichungen erhält, und/oder dadurch, dass die Wandung im übrigen Bereich, beispielsweise durch polieren, oder auch durch laserpolieren, so behandelt wird, dass die zweite Oberflächenstruktur weniger tiefer und/oder stärker abgerundete Gestaltabweichungen erhält. Auf diese Weise kann der Kalkanlagerungsbereich mit einfachen Mitteln hergestellt werden.

Gemäß einer vorteilhaften Weiterbildung der Erfindung ist die Rauheit der ersten Oberflächenstruktur höher als die Rauheit der zweiten Oberflächenstruktur. Dem liegt die Erkenntnis zu Grunde, dass sich Kalk bevorzugt an rauen Oberflächen anlagert. Die Rauheit bezieht sich dabei auf die Tiefe der Gestaltabweichungen der jeweiligen Oberflächenstruktur. Der vorgesehene Unterschied der Rauheit des Kalkanlagerungsbereichs und des übrigen Bereichs kann insbesondere dadurch hergestellt werden, dass die Wandung, welche wenigstens an der zweiten Seite zunächst eine gleichmäßige Rauheit aufweist, im Kalkanlagerungsbereichvon vornherein mit einer aufgerauten Oberflächenstruktur hergestellt und/oder zusätzlich durch Nachbarbeitung aufgerauht wird, und/oder dadurch, dass die Wandung im übrigen Bereich, beispielsweise durch polieren oder laserpolieren, geglättet wird. Auf diese Weise kann der Kalkanlagerungsbereich mit einfachen Mitteln hergestellt werden.

Nach einer vorteilhaften Weiterbildung der Erfindung sind Berge und Täler der zweiten Oberflächenstruktur abgerundeter ausgebildet als Berge und Täler der ersten Oberflächenstruktur. Dieses Merkmal bezieht sich auf die Form der Gestaltabweichungen der jeweiligen Oberflächenstruktur und zwar unabhängig von der Tiefe der Gestaltabweichungen. Dem liegt die Erkenntnis zu Grunde, dass sich Kalk an Oberflächen mit stärker gerundeten Bergen und Tälern weniger anlagert. Oberflächen mit stark abgerundeten Bergen und Tälern können insbesondere mit thermischen Verfahren, wie insbesondere laserpolieren hergestellt werden. Der vorgesehene Unterschied der Abgerundetheit der ersten Oberflächenstruktur gegenüber der Abgerundetheit der zweiten Oberflächenstruktur kann insbesondere dadurch hergestellt werden, dass die Wandung, welche wenigstens an der zweiten Seite zunächst eine gleichmäßige Oberflächenstruktur aufweist, im Kalkanlagerungsbereich, beispielsweise durch Sandstrahlen, scharfkantiger gemacht wird, und/oder dadurch, dass die Wandung im übrigen Bereich, beispielsweise durch polieren oder laserpolieren, abgerundet wird. Auf diese Weise kann der Kalkanlagerungsbereich mit einfachen Mitteln hergestellt werden.

Nach einer vorteilhaften Weiterbildung der Erfindung weist der Kalkanlagerungsbereich eine die Neigung zur Anlagerung von in der Flüssigkeit enthaltenem Kalk erhöhende Beschichtung auf. Eine derartige Beschichtung kann so ausgebildet sein, dass die Oberflächenstruktur im Kalkanlagerungsbereich auch ohne mechanische oder thermische Bearbeitung der ursprünglichen Oberfläche so verändert wird, dass die Neigung zur Anlagerung von Kalk erhöht wird.

Gemäß einer vorteilhaften Weiterbildung der Erfindung weist der übrige Bereich eine die Neigung zur Anlagerung von in der Flüssigkeit enthaltenem Kalk verringernde Beschichtung auf. Eine solche Beschichtung kann so ausgebildet sein, dass die Oberflächenstruktur im übrigen Bereich auch ohne mechanische oder thermische Bearbeitung der ursprünglichen Oberfläche so verändert wird, dass die Neigung zur Anlagerung von Kalk verringert wird. Beispielsweise besteht die Möglichkeit, im übrigen Bereich eine Antihaftbeschichtung aufzubringen und den Kalkanlagerungsbereich beim Beschichten auszusparen. Mögliche Antihaftbeschichtungen sind insbesondere eine Teflonbeschichtung, eine Nanobeschichtung, wie beispielsweise eine Solgelbeschichtung oder eine amorphe Kohlenstoffbeschichtung, auch DLC-Beschichtung genannt.

Nach einer vorteilhaften Weiterbildung der Erfindung ist die Flächenleistung der Heizwiderstandsanordnung an dem Kalkanlagerungsbereich höher als an dem übrigen Bereich. Hierbei ergibt sich an dem Kalkanlagerungsbereich eine höhere Temperatur als an dem übrigen Bereich, was die Anlagerung von Kalk an dem Kalkanlagerungsbereich fördert. Eine erhöhte Flächenleistung kann mit den oben beschriebenen unterschiedlichen Rauheiten und/oder Beschichtungen kombiniert oder alleine angewendet werden. Unter Flächenleistung wird dabei vorzugsweise die durch die Heizwiderstandsanordnung aufgewandte elektrische Leistung verstanden, die an einer mit zu erwärmender Flüssigkeit beaufschlagten Oberfläche der Wandung der Heizeinrichtung in Wärmeenergie umgesetzt wird, d.h. sie gibt die eingesetzte elektrische Heizleistung der Heizwiderstandsanordnung pro vorgegebener Wärmeübergangsfläche der Wandung der Heizeinrichtung an, die der aufzuheizenden Flüssigkeit zugewandt ist.

Gemäß einer vorteilhaften Weiterbildung der Erfindung weist die Temperaturmessanordnung einen in einem ersten Abstand von der Heizwiderstandsanordnung angeordneten ersten Temperaturfühler zur Messung einer ersten Temperatur der Wandung und einen in einem zweiten Abstand von der Heizwiderstandsanordnung angeordneten zweiten Temperaturfühler zur Messung einer zweiten Temperatur der Wandung auf, wobei der zweite Abstand größer als der erste Abstand ist. Die benachbart zur Heizwiderstandsanordnung an der ersten Seite der Wandung gemessenen Temperaturen sind unter anderem von der Temperatur der Heizwiderstandsanordnung und der Temperatur der an der zweiten Seite geführten wasserhaltigen Flüssigkeit abhängig. Hierbei nimmt der Einfluss der Temperatur der Flüssigkeit mit zunehmendem Abstand von der Heizwiderstandsanordnung ab. Indem nun ein in einem ersten Abstand von der Heizwiderstandsanordnung angeordneter erster Temperaturfühler zur Messung einer ersten Temperatur der Wandung und ein in einem zweiten größeren Abstand von der Heizwiderstandsanordnung angeordneter zweiter Temperaturfühler zur Messung einer zweiten Temperatur der Wandung vorgesehen sind, kann- z.B. durch Differenz- oder Quotientenbildung der beiden gemessenen Temperaturen der Einfluss der Temperatur der Flüssigkeit als Störgröße berücksichtigt werden, so dass eine Anlagerung von Kalk anhand der ersten Temperatur und anhand der zweiten Temperatur wesentlich besser erkannt werden kann als im Falle von nur einer gemessenen Temperatur.

Nach einer vorteilhaften Weiterbildung der Erfindung beträgt der erste Abstand wenigstens das Einfache einer Dicke der Wandung, bevorzugt das Zweifache der Dicke der Wandung, besonders bevorzugt das Dreifache der Dicke der Wandung. Auf diese Weise wird sichergestellt, dass der Einfluss der Anlagerung von Kalk zu einer auswertbaren Temperaturdifferenz am ersten Temperaturfühler führt, da durch einen entsprechenden ersten Abstand verhindert wird, dass die erste Temperatur im Wesentlichen der Temperatur der Heizwiderstandsanordnung entspricht.

Gemäß einer vorteilhaften Weiterbildung der Erfindung beträgt der zweite Abstand wenigstens das Zweifache des ersten Abstands, bevorzugt das Dreifache des ersten Abstands, besonders bevorzugt das Vierfache des ersten Abstands. Auf diese Weise wird sichergestellt, dass der Einfluss der Temperatur der Heizwiderstandsanordnung auf die zweite Temperatur wesentlich geringer ist als auf die erste Temperatur. Hierdurch kann der Einfluss der als Störgröße zu betrachtenden Temperatur der Flüssigkeit sicher berücksichtigt werden, so dass sich die Zuverlässigkeit der Erkennung von Kalkanlagerungen weiter verbessert. Hierbei kann der zweite Temperaturfühler so positioniert werden, dass er im Wesentlichen die Temperatur der Flüssigkeit und zwar im Wesentlichen unabhängig von der Temperatur der Heizwiderstandsanordnung erfasst.

Nach einer vorteilhaften Weiterbildung der Erfindung ist die Kalkerkennungseinrichtung zur Erkennung einer Anlagerung von Kalk vorzugsweise anhand einer Temperaturdifferenz aus der ersten Temperatur und der zweiten Temperatur ausgebildet. Indem die Temperaturdifferenz aus der ersten Temperatur und der zweiten Temperatur gebildet und ausgewertet wird, ist der Einfluss der Temperatur der Flüssigkeit aber auch der Einfluss der Temperatur der Heizwiderstandsanordnung automatisch berücksichtigt. Die Temperaturdifferenz ist somit praktisch nur noch von der Stärke der Kalkanlagerung im Kalkanlagerungsbereich abhängig.

Gemäß einer vorteilhaften Weiterbildung der Erfindung initiiert die Kalkerkennungseinrichtung eine Abschaltung der Heizeinrichtung und initiiert bevorzugt eine Ausgabe einer Störungsmeldung, bevorzugt über eine Bedienschnittstelle des wasserführenden Haushaltsgerätes, wenn die Temperaturdifferenz einen ersten Grenzwert übersteigt. Der Grenzwert kann dabei so festgelegt sein, dass eine Beschädigung des Haushaltsgeräts und/oder des Reinigungsgutes auf Grund einer akuten Überhitzung verhindert werden kann. Die Kalkerkennungseinrichtung kann dabei mit der Steuereinrichtung derart verbunden sein, dass die Kalkerkennungseinrichtung im Falle des Überschreitens des ersten Grenzwerts einen Befehl zum Abschalten der Heizeinrichtung senden kann. Dabei ist es von Vorteil, wenn der Bediener durch die Ausgabe einer Störungsmeldung über die automatische Abschaltung der Heizeinrichtung informiert wird, so dass er Maßnahmen zur Behebung der Störung einleiten kann. Hierzu kann eine ohnehin vorhandene Bedienschnittstelle des Haushaltsgerätes verwendet werden. Die Kalkerkennungseinrichtung kann dabei mit der Steuereinrichtung derart verbunden sein, dass die Kalkerkennungseinrichtung im Falle des Überschreitens des ersten Grenzwerts einen Befehl zur Ausgabe einer Störungsmeldung senden kann, wobei die Steuereinrichtung dann die Ausgabe der Störungsmeldung über die Bedienschnittstelle veranlassen kann.

Nach einer vorteilhaften Weiterbildung der Erfindung initiiert die Kalkerkennungseinrichtung eine Ausgabe einer Bedienermeldung, bevorzugt über eine Bedienschnittstelle des wasserführenden Haushaltsgerätes, und initiiert bevorzugt eine Regenerierung einer Enthärtungseinrichtung des wasserführenden Haushaltsgerätes, wenn die Temperaturdifferenz einen zweiten Grenzwert übersteigt. Die Kalkerkennungseinrichtung kann dabei mit der Steuereinrichtung derart zusammenwirken, dass die Kalkerkennungseinrichtung im Falle des Überschreitens des zweiten Grenzwerts einen Befehl zur Ausgabe einer Bedienermeldung senden kann, wobei die Steuereinrichtung dann die Ausgabe der Bedienermeldung über die Bedienschnittstelle veranlassen kann. Der zweite Grenzwert kann niedriger als der erste Grenzwert festgelegt sein und zwar derart, dass er einer ungewöhnlich hohen Kalkanlagerung entspricht, die jedoch noch keine Abschaltung der Heizeinrichtung erfordert. Die Bedienermeldung kann den Bediener beispielsweise dazu auffordern, den Vorrat an Regeneriermittel in der Geschirrspülmaschine zu überprüfen oder etwa die Bedienungsanleitung zu Rate zu ziehen. Dort kann z.B. die Reinigung der Geschirrspülmaschine mittels eines Spezialreinigers oder Entkalkers im Spülgang eines Spülprogramms empfohlen sein. Zusätzlich oder unabhängig hiervon kann es insbesondere vorteilhaft sein, nun eine Regenerierung der Enthärtungseinrichtung automatisch durchzuführen, wenn eine ungewöhnlich hohe Kalkanlagerung darauf hindeutet, dass die Aufnahmefähigkeit der Enthärtungseinrichtung erschöpft ist. Hierzu kann die Kalkerkennungseinrichtung mit der Steuereinrichtung derart zusammenwirken, dass die Kalkerkennungseinrichtung im Falle des Überschreitens des zweiten Grenzwerts einen Befehl zur Durchführung der Regenerierung senden kann, wobei die Steuereinrichtung dann die Regenerierung durch die Regeneriereinrichtung veranlassen kann.

Gemäß einer vorteilhaften Weiterbildung der Erfindung initiiert die Kalkerkennungseinrichtung eine Regenerierung einer Enthärtungseinrichtung des wasserführenden Haushaltsgerätes, wenn die Temperaturdifferenz einen dritten Grenzwert übersteigt.

Hierzu kann die Kalkerkennungseinrichtung mit der Steuereinrichtung derart zusammenwirken, dass die Kalkerkennungseinrichtung im Falle des Überschreitens des dritten Grenzwerts einen Befehl zur Durchführung der Regenerierung senden kann, wobei die Steuereinrichtung dann die Regenerierung durch die Regeneriereinrichtung veranlassen kann. Der dritte Grenzwert kann insbesondere niedriger als der erste Grenzwert und/oder der zweite Grenzwert sein und zwar derart, dass bereits eine beginnende Anlagerung von Kalk erkannt wird. Durch die automatische Regenerierung bei einer beginnenden Anlagerung von Kalk ist sichergestellt, dass die Regenerierung bedarfsgerecht erfolgt, selbst dann, wenn sich die Härte des Frischwassers, beispielsweise nach einem Umzug, ändert. So ist sichergestellt, dass eine Verkalkung des Haushaltsgerätes mit minimalem Einsatz von Regeneriermittel und Frischwasser verhindert wird. Hierbei ist es - anders als bei dem bislang üblichen periodischen Regenerieren - entbehrlich, die Härte des Frischwassers durch den Bediener manuell einzugeben. Auf diese Weise werden Bedienfehler verhindert, welche das Haushaltsgerät und/oder das Reinigungsgut beschädigen, das Spülergebnis verschlechtern und/oder den Verbrauch an Regeneriermittel und/oder Frischwasser erhöhen könnten.

Zweckmäßig kann es insbesondere sein, wenn die Kalkerkennungseinrichtung Bestandteil der Steuereinrichtung ist. Sie kann dort vorzugsweise als Logikmodul in Form einer Ablaufprozedur oder in Hardware implementiert sein. Alternativ kann es ggf. auch zweckmäßig sein, die Kalkerkennungseinrichtung räumlich getrennt von der Steuereinrichtung wie z.B. auf der Heizeinrichtung vorzusehen. Zweckmäßigerweise sind in diesem Fall zwischen der Kalkerkennungseinrichtung und der Steuereinrichtung ein oder mehrere Signalleitungen vorgesehen.

Nach einer vorteilhaften Weiterbildung der Erfindung sind der erste Temperaturfühler als erstes Widerstandsthermometer und der zweite Temperaturfühler als zweites Widerstandsthermometer ausgebildet. Auf diese Weise ergibt sich ein besonders einfacher und kostengünstiger Aufbau des Haushaltsgerätes. Dabei kann es sich insbesondere um Heißleiter, sogenannte NTC's, oder um Kaltleiter, sogenannte PTC's, handeln.

Gemäß einer vorteilhaften Weiterbildung der Erfindung sind das erste Widerstandsthermometer und das zweite Widerstandsthermometer Teil einer

Spannungsteileranordnung, an welche eine vorzugsweise von der Kalkerkennungseinrichtung gelieferte konstante Spannung angelegt ist, wobei eine durch die Spannungsteileranordnung erzeugte Teilspannung mit der Differenz der ersten Temperatur und der zweiten Temperatur korreliert und zur Kalkerkennungseinrichtung übertragen ist. Dabei sind zum Anschließen der Temperaturmessanordnung lediglich drei Leiter erforderlich, nämlich zwei Leiter zum Zuführen der konstanten Spannung sowie ein Leiter zum Zurückführen der Teilspannung. Die auf die konstante Spannung bezogene Teilspannung entspricht der Temperaturdifferenz von der ersten Temperatur und zweiten Temperatur und enthält somit die gesuchte Information, was zu einer einfachen Auswertbarkeit führt. Es ergibt ein besonders einfacher und kostengünstiger Aufbau des Haushaltsgerätes.

Bei dem erfindungsgemäßen Verfahren ist vorgesehen, dass auf der die Flüssigkeit führenden Seite gegenüberliegend der Temperaturmessanordnung ein Kalkanlagerungsbereich ausgebildet wird, der eine höhere Neigung zur Anlagerung von in der Flüssigkeit enthaltenem Kalk aufweist als ein übriger Bereich der die Flüssigkeit führenden Seite, und dass eine Anlagerung von Kalk anhand der mindestens einen Temperatur erkannt wird.

Es ergeben sich die oben beschriebenen Vorteile.

Aus- und Weiterbildungen des erfindungsgemäßen Verfahrens sind bei der Beschreibung des beanspruchten Haushaltsgeräts erläutert.

Die vorstehend erläuterten und/oder in den Unteransprüchen wiedergegebenen vorteilhaften Aus- und Weiterbildungen der Erfindung können dabei - außer z. B. in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert. Es zeigen, jeweils in einer schematischen Prinzipskizze:
- **Figur 1**: ein Ausführungsbeispiel einer erfindungsgemäßen Haushaltsgeschirrspülmaschine in einer schematischen Seitenansicht,
- **Figur 2**: ein erstes Ausführungsbeispiel der Heizeinrichtung der Geschirrspülmaschine der Figur 1, wobei eine erste Seite einer kreiszylinderförmigen Wandung der Heizeinrichtung in einer abgewickelten Darstellung gezeigt ist,
- **Figur 3**: das erste Ausführungsbeispiel der Heizeinrichtung der Geschirrspülmaschine der Figur 1, wobei eine zweite Seite der kreiszylinderförmigen Wandung der Heizeinrichtung in einer abgewickelten Darstellung gezeigt ist,
- **Figur 4**: ein zweites Ausführungsbeispiel der Heizeinrichtung der Geschirrspülmaschine der Figur 1, wobei eine erste Seite einer kreiszylinderförmigen Wandung der Heizeinrichtung in einer abgewickelten Darstellung gezeigt ist,
- **Figur 5**: das zweite Ausführungsbeispiel der Heizeinrichtung der Geschirrspülmaschine der Figur 1, wobei eine zweite Seite der kreiszylinderförmigen Wandung der Heizeinrichtung in einer abgewickelten Darstellung gezeigt ist, und
- **Figur 6**: eine beispielhafte Betriebssequenz der erfindungsgemäßen Geschirrspülmaschinen der Figuren 1 bis 5.

In den folgenden Figuren sind einander entsprechende Teile mit denselben Bezugszeichen versehen. Dabei sind nur diejenigen Bestandteile einer Geschirrspülmaschine mit Bezugszeichen versehen und erläutert, welche für das Verständnis der Erfindung erforderlich sind. Es versteht sich von selbst, dass die erfindungsgemäße Geschirrspülmaschine weitere Teile und Baugruppen umfassen kann.

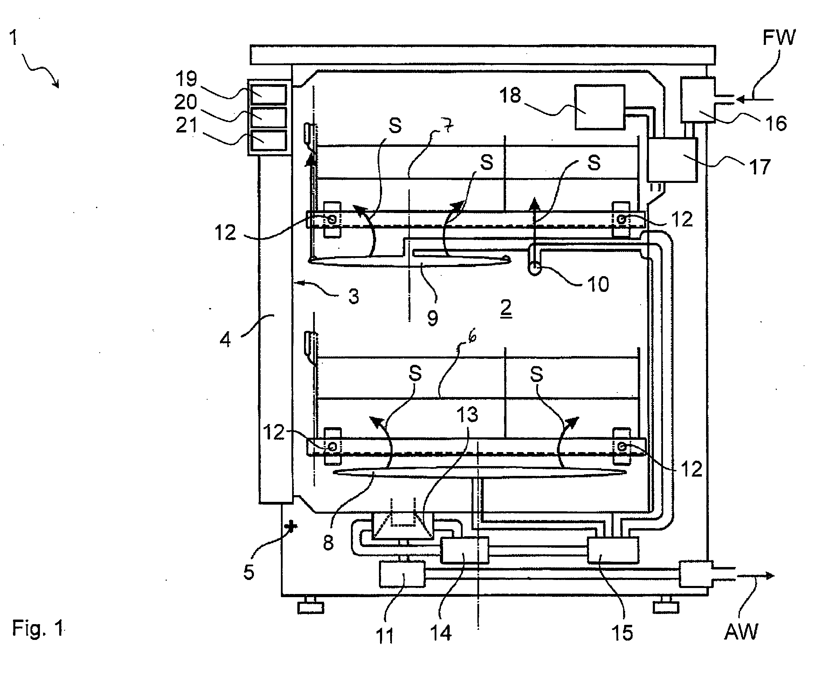

Die in Fig. 1 dargestellte Geschirrspülmaschine 1 ist eine Haushaltsgeschirrspülmaschine und weist einen Spülbehälter 2 zur Aufnahme von zu bearbeitendem Spülgut wie Geschirr, Töpfen, Bestecken, Gläsern, Kochutensilien u. ä. auf. Der Spülbehälter 2 kann einen zumindest im Wesentlichen rechteckigen Grundriss mit einer in Betriebsstellung einem Benutzer zugewandten Vorderseite 3 aufweisen.

Der Behälter 2 ist insbesondere an seiner Vorderseite 3 von einer Tür 4 - auch ein oberseitiger Deckel ist als Tür 4 möglich - verschließbar. Die Tür 4 ist in Fig. 1 in geschlossener Stellung gezeigt und beispielsweise um eine untere Horizontalachse 5 aufschwenkbar. Das Spülgut ist in zumindest einem Spülkorb 6, 7 halterbar; hier sind im Spülbehälter 2 genau zwei Geschirrkörbe 6, 7 übereinander vorgesehen. Die Anzahl an Spülkörben 6, 7 kann je nach Ausmaß und Art der Geschirrspülmaschine 1 variieren.

Auch eine sogenannte Besteckschublade kann zusätzlich vorgesehen sein. Diese Geschirrkörbe 6, 7 sind über Sprüheinrichtungen 8, 9, 10 mit Frischwasser FW und/oder mit umlaufendem Wasser, das mit Reinigungsmittel und/oder anderen Zusatzstoffen versetzt ist, sogenannter wasserhaltiger Spülflüssigkeit bzw. Spülflotte S, beaufschlagbar.

Zum Abpumpen kann die Spülflüssigkeit S aus dem Spülbehälter 2 hingegen über eine Laugen- bzw. Abwasserpumpe 11 als Abwasser AW aus der Maschine 1 geleitet werden.

Hier umfassen die Sprüheinrichtungen 8, 9 jeweils rotierbare Sprüharme, die das Spülgut mit einer aufwärts gerichteten Komponente beaufschlagen. Die Sprüheinrichtung 10 umfasst zum Beispiel einzelne Düsen, die die Spülflotte S ebenfalls mit einer aufwärts gerichteten Komponente zum Spülgut befördert. Alternativ kann auch eine Beaufschlagung mit einer abwärts gerichteten Komponente möglich sein. Auch andere Sprüheinrichtungen sind alternativ oder ergänzend möglich.

Des Weiteren können die Spülkörbe 6, 7 beispielsweise auf Rollen 12 nach vorne verlagerbar sein, um so eine Zugriffstellung für den Benutzer zu erreichen, in der dieser die Spülkörbe 6, 7 bequem be- und entladen kann. Als Bahnen für die Rollen 12 sind vorzugsweise seitliche Schienen im Spülbehälter 2 vorgesehen. Des Weiteren können an den jeweils vorderen Randebenen der Spülkörbe 6, 7 Zug- und Schubgriffe zur Vereinfachung des Ein- und Ausschiebens der Spülkörbe 6, 7 vorgesehen sein.

Das Frischwasser FW und/oder die umlaufende und mit Reinigungsmittel, Klarspülmittel, Zusatzstoffen, und/oder Verschmutzungen aus dem Spülgut versetzte Spülflotte S läuft nach seiner bzw. ihrer Verteilung im Spülbehälter 2 und auf das Spülgut nach unten hin über eine im Bodenbereich des Spülbehälters 2 angeordnete Siebeinheit 13 zu einer dieser nachgeordneten Heizpumpe 14, von der es weiter zu einem Verteiler 15 und von dort aus zu den genannten Sprüheinrichtungen 8, 9, 10 geleitet wird. Die Heizpumpe 13 vereint dabei die Funktionen einer Umwälzpumpe zum Umwälzen von wasserhaltiger Spülflüssigkeit S und einer Heizeinrichtung zum Erwärmen von wasserhaltiger Spülflüssigkeit. Die Erfindung kann aber auch dann angewandt werden, wenn eine Umwälzpumpe und eine Heizeinrichtung separat ausgebildet sind.

Die Aufnahme von Frischwasser FW erfolgt über ein Zulaufventil 16, welches zur gesteuerten Aufnahme von Frischwasser FW aus einer externen Frischwasserquelle ausgebildet wird. Das aufgenommene Frischwasser FW wird stromabwärts des Zulaufventils 16 mittels einer Entkalkungseinrichtung 17 entkalkt, bevor es in den Spülbehälter 2 eingeleitet wird. Hierzu kann die Entkalkungseinrichtung einen Ionentauscher aufweisen, der dem Frischwasser FW kalkbildende Mineralien, wie beispielsweise Kalziumkarbonat, entziehen kann. Wenn die Aufnahmefähigkeit des Ionentauschers erschöpft ist, kann dieser mittels einer Regeneriereinrichtung 18 regeneriert werden, welcher hierzu eine Regenerierflüssigkeit, insbesondere eine Salzlösung, zubereitet und den Ionentauscher mittels dieser Regenerierflüssigkeit spült.

Die Laugenpumpe 11, der Verteiler 15, das Zulaufventil 16, die Entkalkungseinrichtung 17 und die Regeneriereinrichtung 18 sind dabei so mit einer Steuereinrichtung 19, insbesondere über entsprechende Steuerleitungen (hier der zeichnerischen Einfachheit halber weggelassen), verbunden, dass diese Bestandteile 11, 15, 16, 17, und 18 der Geschirrspülmaschine 1 durch die Steuereinrichtung 19 steuerbar und/oder regelbar sind. Weiterhin ist die Heizpumpe 14 derart mit der Steuereinrichtung 19, insbesondere über eine oder mehrere entsprechende Steuerleitungen, verbunden, dass die Heizkomponente als auch die Pumpkomponente separat voneinander durch die Steuereinrichtung 19 steuerbar und/oder regelbar sind.

Darüber hinaus steht die Steuereinrichtung 19 mit einer Bedienschnittstelle 20 in Verbindung, so dass einerseits Bedienhinweise von der Steuereinrichtung 19 an einen Bediener ausgegeben werden können und dass andererseits Bedienbefehle durch den Bediener an die Steuereinrichtung 19 gegeben werden können.

Weiterhin ist die Steuereinrichtung 19 mit einer Kalkerkennungseinrichtung 21 zum Informationsaustausch derart verbunden, dass von der Kalkerkennungseinrichtung 21 Informationen bezüglich eines Vorhandenseins von Kalk an die Steuereinrichtung 19 übertragen werden können.

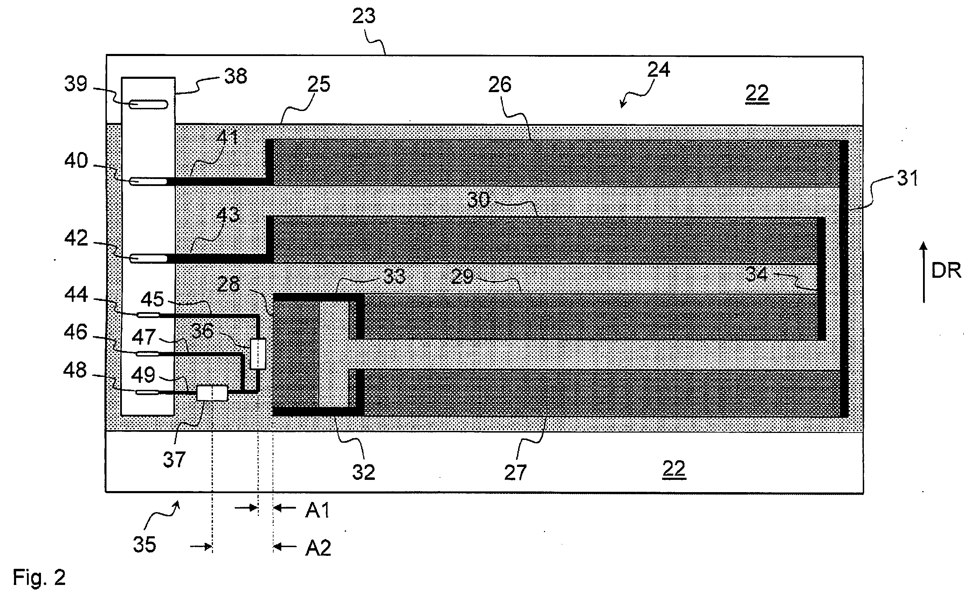

Figur 2 zeigt ein erstes Ausführungsbeispiel der als Heizpumpe 14 ausgebildeten Heizeinrichtung 14 der Geschirrspülmaschine der Figur 1, wobei eine erste Seite 22 einer zylinderförmigen, insbesondere kreiszylinderförmigen, bevorzugt aus Edelstahl gefertigten Wandung 23 der Heizeinrichtung 14 aus zeichnerischen Gründen in einer abgewickelten Darstellung gezeigt ist. Figur 2 ist so zu verstehen, dass die Schmalseiten der rechteckig dargestellten Wandung 23 in der Realität aneinander liegen, so dass die Wandung 23 einen Zylinder bildet, dessen Achse parallel zu einer Durchflussrichtung DR für die Spülflüssigkeit verläuft. Dabei bildet die erste Seite 22 die trockene Außenseite des Zylinders.

Auf der ersten Seite 22 der Wandung 23 ist eine Heizwiderstandsanordnung 24 angeordnet, welche insbesondere in Flachleitertechnik, bevorzugt in Dickschichttechnik, ausgeführt sein kann. Zur Vermeidung von Kurzschlüssen über die leitende Wandung 23 ist dabei auf der Wandung 23 eine Isolierschicht 25 vorgesehen. Die Heizwiderstandsanordnung umfasst im Ausführungsbeispiel einen ersten Heizwiderstand 26, einen zweiten Heizwiderstand 27, einen Referenzwiderstand 28, einen dritten Heizwiderstand 29 und einen vierten Heizwiderstand 30, welche über einen ersten Verbindungsleiter 31, einen zweiten Verbindungsleiter 32, einen dritten Verbindungsleiter 33 und einen vierten Verbindungsleiter 34 so verbunden sind, dass sie in Reihe geschaltet sind. Die Verbindungsleiter 31, 32, 33, 34 weisen dabei einen wesentlich kleineren längenspezifischen Widerstand als die Widerstände 26, 27, 28, 29, 30 auf, so dass beim Anlegen einer Spannung an die Heizwiderstandsanordnung 24 der allergrößte Teil der erzeugten Wärme im Bereich der Widerstände 26, 27, 28, 29, 30 entsteht.

Weiterhin ist auf der ersten Seite 22 der Wandung 23 eine Temperaturmessanordnung 35 vorgesehen, welche einen ersten bevorzugt als erstes Widerstandsthermometer 36 ausgebildeten Temperaturfühler 36 und einen zweiten bevorzugt als zweites Widerstandsthermometer 37 ausgebildeten Temperaturfühler 37 umfasst.

Darüber hinaus ist auf der ersten Seite 22 der Wandung 23 eine Steckerwanne 38 zum elektrischen Anschließen der Heizeinrichtung 14 an einen Kabelbaum des Haushaltsgeräts 1 vorgesehen. Diese weist einen ersten Stecker 39 auf, der mit der Wandung 23 leitend verbunden und zum Anschließen einer Masseleitung vorgesehen ist. Ein zweiter Stecker 40 ist über einen Verbindungsleiter 41 mit dem ersten Heizwiderstand 26 und ein dritter Stecker 42 ist über einen Verbindungsleiter 42 mit dem vierten Heizwiderstand 30 verbunden. An die Stecker 40 und 42 ist dabei eine durch die Steuereinrichtung 19 steuerbare Versorgungsspannung für die Heizeinrichtung 14 anschließbar.

Die Steckerwanne 38 umfasst weiterhin einen vierten Stecker 44, welcher über einen Verbindungsleiter 45 mit einem Anschluss des ersten Temperaturfühlers 36 verbunden ist. Ein fünfter Stecker 46 ist über einen Verbindungsleiter 47 mit dem anderen Anschluss des ersten Temperaturfühlers 36 sowie mit einem Anschluss des zweiten Temperaturfühlers 37 verbunden. Ebenso ist ein sechster Stecker 48 über einen Verbindungsleiter 49 mit dem anderen Anschluss des zweiten Temperaturfühlers 37 verbunden. Die Stecker 44, 46 und 48 sind zum Verbinden der Temperaturmessanordnung 35 mit der Kalkerkennungseinrichtung 21 vorgesehen.

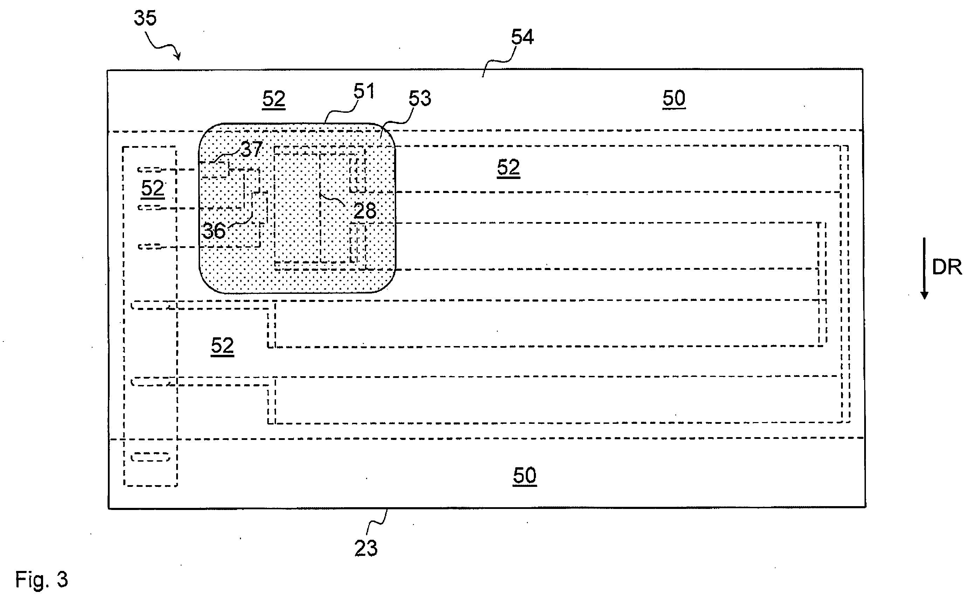

Figur 3 zeigt eine zweite Seite 50 der Wandung 23 der Figur 2 ebenfalls in einer abgewickelten Darstellung. Die zweite Seite 50 ist zum Führen der Spülflüssigkeit S vorgesehen und umfasst einen vorzugsweise spezifischen, d.h. vorgegebenen bzw. definierten Kalkanlagerungsbereich 51, der der Temperaturmessanordnung 35 auf der trockenen Außenseite 22 der Wandung 23 gegenüberliegt. Die zweite Seite 50 bildet also die Innenmantelfläche des Heizrohrs und kommt somit mit zu erwärmender Flüssigkeit in Kontakt, die durch das Heizrohr strömt. Der Kalkanlagerungsbereich 51 weist eine höhere Neigung zur Anlagerung von in der Flüssigkeit S enthaltenem Kalk auf als ein übriger Bereich 52 der zweiten Seite 50.

Grundsätzlich lagert sich Kalk bevorzugt an heißen Oberflächen an. Bei einer Geschirrspülmaschine 1 lagert sich der Kalk folglich üblicherweise im Bereich der Heizeinrichtung 14 an. Durch die Ausbildung des spezifischen Kalkanlagerungsbereichs 51 wird nun sichergestellt, dass sich der in der wasserhaltigen Flüssigkeit S befindliche Kalk zu allererst gegenüber der Temperaturmessanordnung 35 anlagert, d.h. bevor sich der Kalk im übrigen Bereich 52 der zweiten Seite 50 anlagert. Da nun Kalk eine geringere Wärmeleitfähigkeit als typische Wandungsmaterialien, wie beispielsweise Edelstahl, aufweisen, verändert sich bei einer Anlagerung von Kalk im Bereich des Kalkanlagerungsbereichs 51 die Temperaturverteilung in der Wandung 23. So steigt die in einem bestimmten Abstand von der Heizwiderstandsanordnung 24 an der ersten Seite 22 der Wandung 23 gemessene Temperatur bei der Anlagerung von Kalk im auf der zweiten Seite 50 gegenüberliegenden Kalkanlagerungsbereich 51 an. Die erfindungsgemäße Kalkerkennungseinrichtung 21 ist nun so ausgebildet, dass sie eine Anlagerung von Kalk an dem Kalkanlagerungsbereich 51 anhand der mindestens einen gemessenen Temperatur erkennt. Auf diese Weise ist eine beginnende Verkalkung der Geschirrspülmaschine 1 frühzeitig erkennbar, so dass Gegenmaßnahmen getroffen werden können, bevor das Spülergebnis leidet oder die Geschirrspülmaschine 1 gar beschädigt wird.

Zweckmäßigerweise weist der Kalkablagerungsbereich 51 eine erste Oberflächenstruktur und der übrige Bereich 52 eine zweite Oberflächenstruktur auf, wobei die erste Oberflächenstruktur so ausgebildet ist, dass sie im Vergleich zu der zweiten Oberflächenstruktur eine Anlagerung von Kalk stärker begünstigt. Unter einer Oberflächenstruktur wird dabei eine tatsächliche Struktur einer Oberfläche verstanden, welche gegenüber einer idealen glatten Oberfläche Gestaltabweichungen wie Rillen, Riefen, Schuppen, Kuppen und dergleichen aufweist. Dabei hat sich gezeigt, dass sich Kalk bevorzugt an solchen Oberflächen anlagert, welche tiefe und/oder wenig abgerundete Gestaltabweichungen aufweisen. Der vorgesehene Unterschied der ersten Oberflächenstruktur und der zweiten Oberflächenstruktur kann dadurch hergestellt werden, dass die Wandung 23, welche wenigstens an der zweiten Seite 50 zunächst eine gleichmäßige Oberflächenstruktur aufweist, im Kalkanlagerungsbereich 51, beispielsweise durch Sandstrahlen oder Schleifen, so behandelt wird, dass die erste Oberflächenstruktur tiefere und/oder weniger abgerundete Gestaltabweichungen erhält, und/oder dadurch, dass die Wandung 23 im übrigen Bereich 52, beispielsweise durch polieren, oder auch durch laserpolieren, so behandelt wird, dass die erste Oberflächenstruktur weniger tiefer und/oder stärker abgerundete Gestaltabweichungen erhält. Auf diese Weise kann der Kalkanlagerungsbereich 51 mit einfachen Mitteln hergestellt werden.

Vorteilhafterweise ist die Rauheit der ersten Oberflächenstruktur höher als die Rauheit der zweiten Oberflächenstruktur. Dem liegt die Erkenntnis zu Grunde, dass sich Kalk bevorzugt an rauen Oberflächen anlagert. Die Rauheit bezieht sich dabei auf die Tiefe der Gestaltabweichungen der jeweiligen Oberflächenstruktur. Der vorgesehene Unterschied der Rauheit des Kalkanlagerungsbereichs 51 und des übrigen Bereichs 52 kann dadurch hergestellt werden, dass die Wandung 23, welche wenigstens an der zweiten Seite 50 zunächst eine gleichmäßige Rauheit aufweist, im Kalkanlagerungsbereich 51, beispielsweise durch Sandstrahlen, aufgeraut wird, und/oder dadurch, dass die Wandung 23 im übrigen Bereich 52, beispielsweise durch polieren oder laserpolieren, geglättet wird. Auf diese Weise kann der Kalkanlagerungsbereich 51 mit einfachen Mitteln hergestellt werden.

Bevorzugt sind Berge und Täler der zweiten Oberflächenstruktur abgerundeter ausgebildet als Berge und Täler der ersten Oberflächenstruktur. Dieses Merkmal bezieht sich auf die Form der Gestaltabweichungen der jeweiligen Oberflächenstruktur und zwar unabhängig von der Tiefe der Gestaltabweichungen. Dem liegt die Erkenntnis zu Grunde, dass sich Kalk an Oberflächen mit stärker gerundeten Bergen und Tälern weniger anlagert. Oberflächen mit stark abgerundeten Bergen und Tälern können insbesondere mit thermischen Verfahren, wie insbesondere laserpolieren hergestellt werden. Der vorgesehene Unterschied der Abgerundetheit der ersten Oberflächenstruktur gegenüber der Abgerundetheit der zweiten Oberflächenstruktur kann dadurch hergestellt werden, dass die Wandung 23, welche wenigstens an der zweiten Seite 50 zunächst eine gleichmäßige Oberflächenstruktur aufweist, im Kalkanlagerungsbereich 51, beispielsweise durch Sandstrahlen, scharfkantiger gemacht wird, und/oder dadurch, dass die Wandung23 im übrigen Bereich 52, beispielsweise durch polieren oder laserpolieren, abgerundet wird. Auf diese Weise kann der Kalkanlagerungsbereich mit einfachen Mitteln hergestellt werden.

Dabei kann der Kalkanlagerungsbereich 51 ggf. eine die Neigung zur Anlagerung von in der Flüssigkeit S enthaltenem Kalk erhöhende Beschichtung 53 aufweisen. Eine derartige Beschichtung kann so ausgebildet sein, dass die Rauheit im Kalkanlagerungsbereich 51 auch ohne mechanische Bearbeitung erhöht wird.

Weiterhin kann der übrige Bereich 52 ggf. eine die Neigung zur Anlagerung von in der Flüssigkeit S enthaltenem Kalk verringernde Beschichtung 54 aufweisen. Eine solche Beschichtung kann so ausgebildet sein, dass die die Oberflächenstruktur im übrigen Bereich 52 auch ohne mechanische oder thermische Bearbeitung der ursprünglichen Oberfläche so verändert wird, dass die Neigung zur Anlagerung von Kalk verringert wird. Beispielsweise besteht die Möglichkeit, im übrigen Bereich 52 eine Antihaftbeschichtung 54 aufzubringen und den Kalkanlagerungsbereich 51 beim Beschichten auszusparen. Mögliche Antihaftbeschichtungen 54 sind insbesondere eine Teflonbeschichtung, eine Nanobeschichtung, wie beispielsweise eine Solgelbeschichtung oder eine amorphe Kohlenstoffbeschichtung, auch DLC-Beschichtung genannt.

Im ersten Ausführungsbeispiel weist die Temperaturmessanordnung 35 einen in einem ersten Abstand A1 von der Heizwiderstandsanordnung 24, insbesondere von deren Referenzheizleiter 28, angeordneten ersten Temperaturfühler 36 zur Messung einer ersten Temperatur der Wandung 23 und einen in einem zweiten Abstand A2 von der Heizwiderstandsanordnung 24, insbesondere von deren Referenzheizleiter 28, angeordneten zweiten Temperaturfühler 37 zur Messung einer zweiten Temperatur der Wandung 23 auf, wobei der zweite Abstand A2 größer als der erste Abstand A1 ist. Die benachbart zur Heizwiderstandsanordnung 24 an der ersten Seite 22 der Wandung 23 gemessenen Temperaturen sind unter anderem von der Temperatur der Heizwiderstandsanordnung 24 und der Temperatur der an der zweiten Seite 50 geführten wasserhaltigen Flüssigkeit S abhängig. Hierbei nimmt der Einfluss der Temperatur der Flüssigkeit S mit zunehmendem Abstand von der Heizwiderstandsanordnung 24, insbesondere von deren Referenzheizleiter 28, ab. Indem nun ein in einem ersten Abstand A1 von der Heizwiderstandsanordnung 24, insbesondere von deren Referenzheizleiter 28, angeordneter erster Temperaturfühler 36 zur Messung einer ersten Temperatur der Wandung 23 und ein in einem zweiten größeren Abstand A2 von der Heizwiderstandsanordnung 24 angeordneter zweiter Temperaturfühler 37 zur Messung einer zweiten Temperatur der Wandung 23 vorgesehen sind, kann der Einfluss der Temperatur der Flüssigkeit S als Störgröße berücksichtigt werden, so dass eine Anlagerung von Kalk anhand der ersten Temperatur und anhand der zweiten Temperatur wesentlich besser erkannt werden kann als im Falle von nur einer gemessenen Temperatur. Hierbei kann der zweite Temperaturfühler 37 so positioniert werden, dass er im Wesentlichen die Temperatur der Flüssigkeit S und zwar im Wesentlichen unabhängig von der Temperatur der Heizwiderstandsanordnung 24, insbesondere deren Referenzheizleiter 28, erfasst.

Bevorzugt beträgt der erste Abstand A1 wenigstens das Einfache einer Dicke der Wandung 23, bevorzugt das Zweifache der Dicke der Wandung 23, besonders bevorzugt das Dreifache der Dicke der Wandung 23. Auf diese Weise wird sichergestellt, dass der Einfluss der Anlagerung von Kalk zu einer auswertbaren Temperaturdifferenz am ersten Temperaturfühler 36 führt, da durch einen entsprechenden ersten Abstand A1 verhindert wird, dass die erste Temperatur im Wesentlichen der Temperatur der Heizwiderstandsanordnung 24, insbesondere deren Referenzheizleiter 28, entspricht.

Vorteilhafterweise beträgt der zweite Abstand A2 wenigstens das Zweifache des ersten Abstands A1, bevorzugt das Dreifache des ersten Abstands A1, besonders bevorzugt das Vierfache des ersten Abstands A1. Auf diese Weise wird sichergestellt, dass der Einfluss der Temperatur der Heizwiderstandsanordnung 24 auf die zweite Temperatur wesentlich geringer ist als auf die erste Temperatur. Hierdurch kann der Einfluss der als Störgröße zu betrachtenden Temperatur der Flüssigkeit S sicher berücksichtigt werden, so dass sich die Zuverlässigkeit der Erkennung von Kalkanlagerungen weiter verbessert.

Zweckmäßigerweise ist die Kalkerkennungseinrichtung 21 zur Erkennung einer Anlagerung von Kalk anhand einer Temperaturdifferenz aus der ersten Temperatur und der zweiten Temperatur ausgebildet. Indem vorzugsweise die Temperaturdifferenz aus der ersten Temperatur und der zweiten Temperatur gebildet und ausgewertet wird, ist der Einfluss der Temperatur der Flüssigkeit S aber auch der Einfluss der Temperatur der Heizwiderstandsanordnung 35 automatisch berücksichtigt. Die Temperaturdifferenz ist somit praktisch nur noch von der Stärke der Kalkanlagerung im Kalkanlagerungsbereich 51 abhängig.

Vorteilhafterweise sind der erste Temperaturfühler 36 als erstes Widerstandsthermometer 36 und der zweite Temperaturfühler 37 als zweites Widerstandsthermometer 37 ausgebildet. Auf diese Weise ergibt sich ein besonders einfacher und kostengünstiger Aufbau des Haushaltsgerätes 1. Dabei kann es sich insbesondere um Heißleiter, sogenannte NTC's, oder um Kaltleiter, sogenannte PTC's, handeln.

Im Ausführungsbeispiel sind das erste Widerstandsthermometer 36 und das zweite Widerstandsthermometer 37 Teil einer Spannungsteileranordnung 36, 37, an welche über die Kontakte 44 und 48 eine vorzugsweise von der Kalkerkennungseinrichtung 21 gelieferte konstante Spannung angelegt ist, wobei eine durch die Spannungsteileranordnung 36, 37 erzeugte Teilspannung mit der Differenz der ersten Temperatur und der zweiten Temperatur korreliert und über den Kontakt 46 zur Kalkerkennungseinrichtung 21 übertragen ist. Dabei sind zum Anschließen der Temperaturmessanordnung 35 lediglich drei Leiter erforderlich, nämlich zwei Leiter zum Zuführen der konstanten Spannung sowie ein Leiter zum Zurückführen der Teilspannung. Die auf die konstante Spannung bezogene Teilspannung entspricht der Temperaturdifferenz von der ersten Temperatur und zweiten Temperatur und enthält somit die gesuchte Information, was zu einer einfachen Auswertbarkeit führt. Es ergibt ein besonders einfacher und kostengünstiger Aufbau des Haushaltsgerätes 1.

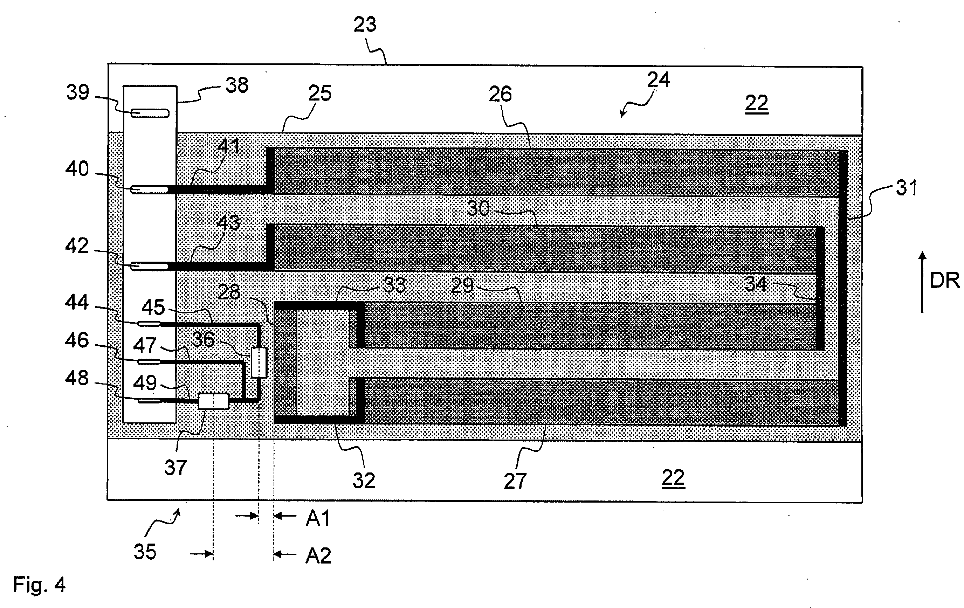

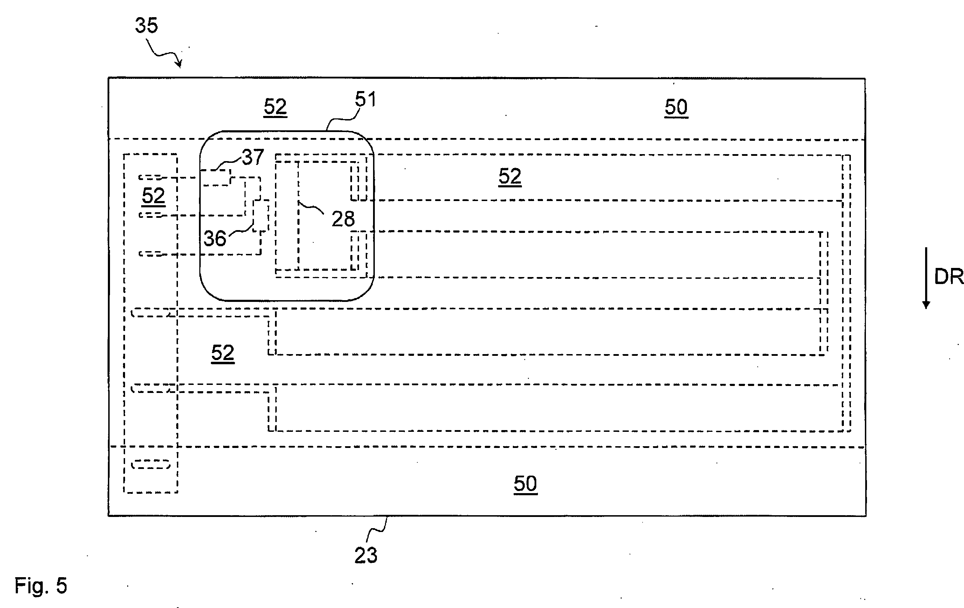

Die Figuren 4 und 5 zeigen ein zweites Ausführungsbeispiel der Heizeinrichtung der Geschirrspülmaschine der Figur 1, wobei im Folgenden lediglich die Unterschiede zum ersten Ausführungsbeispiel erläutert werden.

Im zweiten Ausführungsbeispiel ist die Flächenleistung der Heizwiderstandsanordnung 24 an dem Kalkanlagerungsbereich 51 höher als an dem übrigen Bereich. Dies wird dadurch erreicht, dass der Referenzwiderstand 28, der dem rohrinnenseitigen, von der zu erwärmenden Flüssigkeit beaufschlagten Kalkanlagerungsbereich 51 auf der trockenen Außenseite des Heizrohrs gegenüberliegt, einen höheren längenspezifischen Widerstand aufweist als die Heizwiderstände 26, 27, 29 und 30, so dass auf die Länge bezogen an dem Referenzwiderstand 28 eine höhere Spannung anliegt als an den Heizwiderständen 26, 27, 29 und 30. Hierdurch ergibt sich an dem Kalkanlagerungsbereich 51 eine höhere Temperatur als an dem übrigen Bereich 52, was die Anlagerung von Kalk an dem Kalkanlagerungsbereich 51 fördert. Eine erhöhte Flächenleistung kann mit den oben beschriebenen unterschiedlichen Rauheiten und/oder Beschichtungen kombiniert oder alleine angewendet werden.

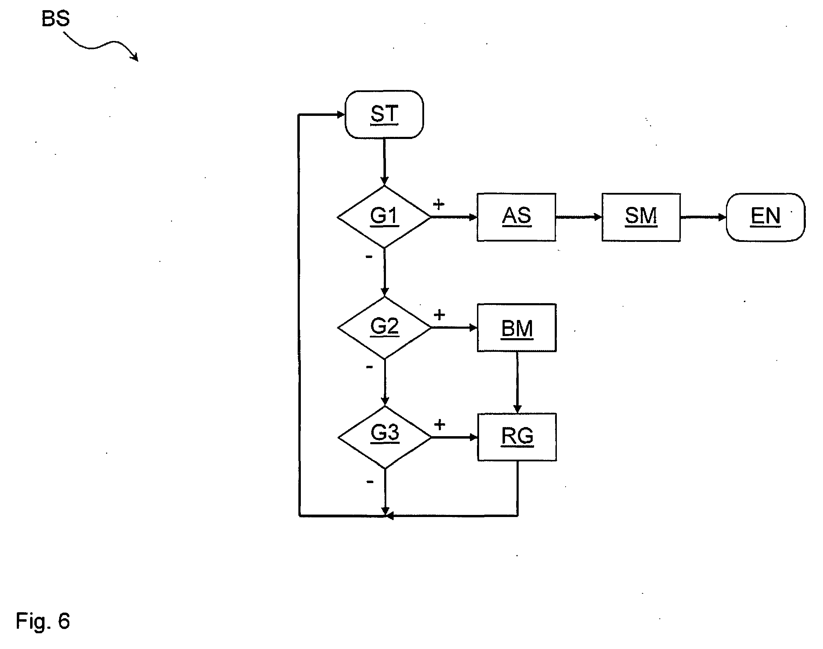

Figur 6 zeigt eine beispielhafte Betriebssequenz BS der erfindungsgemäßen Geschirrspülmaschinen der Figuren 1 bis 5. Ausgehend vom Start ST der Betriebssequenz BS erfolgt zunächst eine Überprüfung, ob bei eingeschalteter Heizeinrichtung 14 die Temperaturdifferenz einen ersten Grenzwert G1 überschreitet. Falls dies zutrifft, initiiert die Kalkerkennungseinrichtung 21 zunächst eine Abschaltung AS der Heizeinrichtung 14 und danach bevorzugt eine Ausgabe einer Störungsmeldung SM, bevorzugt über eine Bedienschnittstelle 20 des wasserführenden Haushaltsgerätes 1. Der Grenzwert G1 kann dabei so festgelegt sein, dass eine Beschädigung des Haushaltsgeräts 1 und/oder des Reinigungsgutes auf Grund einer akuten Überhitzung verhindert werden kann. Die Kalkerkennungseinrichtung 51 kann dabei mit der Steuereinrichtung 19 derart wirkverbunden sein, dass die Kalkerkennungseinrichtung 21 im Falle des Überschreitens des ersten Grenzwerts G1 einen Befehl zum Abschalten der Heizeinrichtung 14 senden kann. Dabei ist es von Vorteil, wenn der Bediener durch die Ausgabe einer Störungsmeldung SM über die automatische Abschaltung der Heizeinrichtung 14 informiert wird, so dass er Maßnahmen zur Behebung der Störung einleiten kann. Hierzu kann eine ohnehin vorhandene Bedienschnittstelle 20 des Haushaltsgerätes 1 verwendet werden. Die Kalkerkennungseinrichtung 21 kann dabei mit der Steuereinrichtung 19 derart wirkverbunden sein, dass die Kalkerkennungseinrichtung 21 im Falle des Überschreitens des ersten Grenzwerts G1 einen Befehl zur Ausgabe einer Störungsmeldung SM senden kann, wobei die Steuereinrichtung 19 dann die Ausgabe der Störungsmeldung über die Bedienschnittstelle veranlassen kann. Nach der Ausgabe der Störungsmeldung SM ist dann das Ende EN der Betriebssequenz erreicht.

Sofern der erste Grenzwert G1 durch die Temperaturdifferenz nicht überschritten wird, erfolgt eine Überprüfung, ob durch die Temperaturdifferenz ein zweiter Grenzwert G2 überschritten ist. Falls ja, so initiiert die Kalkerkennungseinrichtung 21 eine Ausgabe einer Bedienermeldung BM, bevorzugt über eine Bedienschnittstelle 20 des wasserführenden Haushaltsgerätes 1, und danach bevorzugt eine Regenerierung RG einer Enthärtungseinrichtung 17 des wasserführenden Haushaltsgerätes 1. Die Kalkerkennungseinrichtung 21 kann dabei mit der Steuereinrichtung 19 derart wirkverbunden sein, dass die Kalkerkennungseinrichtung 21 im Falle des Überschreitens des zweiten Grenzwerts G2 einen Befehl zur Ausgabe einer Bedienermeldung BM senden kann, wobei die Steuereinrichtung 19 dann die Ausgabe der Bedienermeldung BM über die Bedienschnittstelle 20 veranlassen kann. Der zweite Grenzwert G2 kann niedriger als der erste Grenzwert G1 festgelegt sein und zwar derart, dass er einer ungewöhnlich hohen Kalkanlagerung entspricht, die jedoch noch keine Abschaltung der Heizeinrichtung 14 erfordert. Die Bedienermeldung BM kann den Bediener beispielsweise dazu auffordern, den Vorrat an Regeneriermittel in der Geschirrspülmaschine 1 zu überprüfen oder etwa die Bedienungsanleitung zu Rate zu ziehen. Zusätzlich oder unabhängig hiervon kann nun insbesondere eine Regenerierung RG der Enthärtungseinrichtung 17 automatisch durchgeführt werden, da eine ungewöhnlich hohe Kalkanlagerung darauf hindeutet, dass die Aufnahmefähigkeit der Enthärtungseinrichtung 17 erschöpft ist. Hierzu kann die Kalkerkennungseinrichtung 21 mit der Steuereinrichtung 19 derart wirkverbunden sein, dass die Kalkerkennungseinrichtung 21 im Falle des Überschreitens des zweiten Grenzwerts G2 einen Befehl zur Durchführung der Regenerierung RG senden kann, wobei die Steuereinrichtung 19 dann die Regenerierung RG durch die Regeneriereinrichtung 18 veranlassen kann. Nach der Regenerierung RG kann die Betriebssequenz BS, gegebenenfalls nach einer Pause, erneut durchgeführt werden.

Sofern nun auch der zweite Grenzwert G2 durch die Temperaturdifferenz nicht überschritten wird, erfolgt eine Überprüfung, ob durch die Temperaturdifferenz ein dritter Grenzwert G3 überschritten ist. Falls dies zutrifft, initiiert die Kalkerkennungseinrichtung 21 eine Regenerierung RG einer Enthärtungseinrichtung 17 des wasserführenden Haushaltsgerätes 1. Hierzu kann die Kalkerkennungseinrichtung 21 mit der Steuereinrichtung 19 derart wirkverbunden sein, dass die Kalkerkennungseinrichtung 21 im Falle des Überschreitens des dritten Grenzwerts G3 einen Befehl zur Durchführung der Regenerierung RG senden kann, wobei die Steuereinrichtung 19 dann die Regenerierung RG durch die Regeneriereinrichtung 18 veranlassen kann. Der dritte Grenzwert RG kann niedriger als der erste Grenzwert G1 und/oder der zweite Grenzwert sein G2 und zwar derart, dass bereits eine beginnende Anlagerung von Kalk erkannt wird. Durch die automatische Regenerierung RG bei einer beginnenden Anlagerung von Kalk ist sichergestellt, dass die Regenerierung RG bedarfsgerecht erfolgt, selbst dann, wenn sich die Härte des Frischwassers FW, beispielsweise nach einem Umzug, ändert. So ist sichergestellt, dass eine Verkalkung des Haushaltsgerätes 1 mit minimalem Einsatz von Regeneriermittel und Frischwasser FW verhindert wird. Hierbei ist es - anders als bei dem bislang üblichen periodischen Regenerieren - entbehrlich, die Härte des Frischwassers FW durch den Bediener manuell einzugeben. Auf diese Weise werden Bedienfehler verhindert, welche das Haushaltsgerät 1 und/oder das Reinigungsgut beschädigen, das Spülergebnis verschlechtern und/oder den Verbrauch an Regeneriermittel und/oder Frischwasser FW erhöhen könnten. Falls auch der dritte Grenzwert G3 nicht überschritten ist, kann die Betriebssequenz BS, gegebenenfalls nach einer Pause, erneut durchgeführt werden.

Zusammenfassend betrachtet ist es zur möglichst frühzeitigen Erkennung bzw. Erfassung einer einsetzenden Verkalkung an einer flüssigkeitsbeströmten Wandung zweckmäßig, auf deren mit der zu erwärmenden Flüssigkeit in Kontakt kommenden ersten Seite einen spezifischen, d.h. eigens vorgesehenen Kalkanlagerungsbereich bereitzustellen, der stärker zur Verkalkung als der restliche Flächenbereich der ersten Seite der Wandung neigt und dem auf der der Flüssigkeit gegenüberliegenden, zweiten Seite der Wandung, die vorzugsweise trocken bleibt, eine Temperaturmesseinrichtung zugeordnet ist. Der spezifische Verkalkungsbereich auf der ersten Seite der Wandung kann insbesondere durch eine örtlich begrenzte, eigens der zweiten Seite der Wandung zugeordnete Referenzheizleiterfläche bewirkt sein. Alternativ kann es zur Bereitstellung eines lokal begrenzten Kalkanlagerungsbereichs auf der ersten Seite der Wandung genügen, wenn auf der zweiten, gegenüberliegenden Seite der Wandung ein Abschnitt eines Heizleiters der Heizwiderstandsanordnung eine größere Heizleistung als entlang seinem restlichen Verlauf erzeugt. Bei einem flächig an der zweiten Seite, insbesondere der trockenen, d.h. nicht flüssigkeitsbeströmten Außenseite der Wandung angebrachten Heizleiter kann dazu zweckmäßigerweise ein definierter Längsabschnitt schmaler, d.h. mit einer geringeren Quererstreckung bzw. Breite als in seinem übrigen Verlauf ausgebildet sein, so dass sich an seiner Schmalstelle eine größere Flächenleistung und damit eine höhere Wärmeenergieabgabe einstellt. Die lokal höhere Aufheizung bewirkt auf der mit der Flüssigkeit in Kontakt kommenden ersten Seite der Wandung eine größere Neigung zur Verkalkung als in deren restlichem mit der Flüssigkeit in Kontakt kommenden Bereich.

Zweckmäßigerweise ist die Wandung zu einem Rohr, insbesondere etwa kreiszylinderförmigen Rohr geformt. Dieses ist von der jeweilig zu erwärmenden Flüssigkeit durchströmt. Auf seiner trockenen Außenmantelfläche ist eine Heizwiderstandsanordnung angebracht, die der Aufheizung der im Rohr fließenden Flüssigkeit dient. Es ist also ein Heizrohr gebildet. Weiterhin ist eine Temperaturmessanordnung auf der Außenmantelfläche dieses Rohrs vorgesehen. Sie ist einem lokal begrenzten Kalkanlagerungsbereich zugeordnet, der auf der mit der Flüssigkeit in Kontakt kommenden Innenmantelfläche des Rohres spezifisch, d.h. eigens vorgesehen ist und zu einer stärkeren Anlagerung von Kalk als die übrige Innenmantelfläche des Heizrohres neigt.

Insbesondere kann die Heizwiderstandsanordnung auf der zweiten Seite der Wandung ein oder mehrere Heizleiter in Flachleitertechnik, insbesondere in Dickschichttechnik, aufweisen. Dies stellt eine flache Bauform der Heizwiderstandsanordnung auf der zweiten Seite der Wandung sicher. Zudem ermöglicht sie einen hohen Wirkungsgrad der Wärmeenergieübertragung von der zweiten Seite auf die erste Seite der Wandung, die von der Flüssigkeit kontaktiert wird. Auch lässt sie sich fertigungstechnisch einfach auf die zweite Seite der Wandung aufbringen, so dass die Massenfertigung von Heizeinrichtungen erleichtert ist.

Alternativ kann die Heizwiderstandsanordnung ggf. auch durch ein oder mehrere Rohrheizkörper oder sonstige Heizmittel gebildet sein, die auf der zweiten Seite der Wandung angeordnet sind und diese zweite Seite vorzugsweise thermisch kontaktieren.

### Bezugszeichenliste

- 1: Wasserführendes Haushaltsgerät, Haushaltsgeschirrspümaschine
- 2: Spülbehälter
- 3: Vorderseite
- 4: Tür
- 5: Schwenkachse
- 6: Spülkorb
- 7: Spülkorb
- 8: Sprüheinrichtung
- 9: Sprüheinrichtung
- 10: Sprüheinrichtung
- 11: Laugenpumpe
- 12: Rollen
- 13: Siebeinrichtung
- 14: Heizeinrichtung, Heizpumpe
- 15: Verteiler
- 16: Zulaufventil
- 17: Entkalkungseinrichtung
- 18: Regeneriereinrichtung
- 19: Steuereinrichtung
- 20: Bedienschnittstell
- 21: Kalkerkennungseinrichtung
- 22: erste Seite, mit der Heizwiderstandsanordnung ausgerüstete Seite
- 23: Wandung
- 24: Heizwiderstandsanordnung
- 25: Isolierschicht
- 26: erster Heizwiderstand
- 27: zweiter Heizwiderstand
- 28: Referenzwiderstand
- 29: dritter Heizwiderstand
- 30: vierter Heizwiderstand
- 31: erster Verbindungsleiter
- 32: zweiter Verbindungsleiter
- 33: dritter Verbindungsleiter
- 34: vierter Verbindungsleiter
- 35: Temperaturmessanordnung
- 36: erste Temperaturfühler
- 37: zweiter Temperaturfühler
- 38: Steckerwanne
- 39: erster Stecker
- 40: zweiter Stecker
- 41: Verbindungsleiter
- 42: dritter Stecker
- 43: Verbindungsleiter
- 44: vierter Stecker
- 45: Verbindungsleiter
- 46: fünfter Stecker
- 47: Verbindungsleiter
- 48: sechster Stecker
- 49: Verbindungsleiter
- 50: zweite Seite, flüssigkeitsführende Seite
- 51: Kalkanlagerungsbereich
- 52: übriger Bereich
- 53: Beschichtung
- 54: Beschichtung
Spülflüssigkeit
- DR: Durchflussrichtung
- A1: erster Abstand
- A2: zweiter Abstand

- BS: Betriebssequenz
- ST: Start
- G1: erster Grenzwert
- AS: Abschaltung der Heizeinrichtung
- SM: Ausgabe Störungsmeldung
- EN: Ende

- G2: zweiter Grenzwert
- BM: Bedienermeldung
- RG: Regenerierung der Entkalkungseinrichtung
- G3: dritter Grenzwert

## Patentansprüche

1. Wasserführendes Haushaltsgerät, insbesondere Haushaltsgeschirrspümaschine (1), mit einer Heizeinrichtung (14), insbesondere mit einer Heizpumpe (14), zum Erwärmen einer wasserhaltigen Flüssigkeit (S), insbesondere einer wasserhaltigen Spülflüssigkeit (S), welche eine Wandung (23), insbesondere aus Edelstahl, aufweist, wobei eine erste Seite (22) der Wandung (23) mit einer Heizwiderstandsanordnung (24) sowie mit einer von der Heizwiderstandsanordnung (24) beabstandeten Temperaturmessanordnung (35) zur Messung wenigstens einer Temperatur der Wandung (23) ausgerüstet ist, und wobei eine gegenüberliegende zweite Seite (50) der Wandung (23) zum Führen der Flüssigkeit (S) vorgesehen ist, **dadurch gekennzeichnet, dass** auf der zweiten Seite der Wandung (23) gegenüberliegend der Temperaturmessanordnung (35) ein Kalkanlagerungsbereich (51) ausgebildet ist, der eine höhere Neigung zur Anlagerung von in der Flüssigkeit (S) enthaltenem Kalk aufweist als ein übriger Bereich (52) der zweiten Seite (50), und dass eine Kalkerkennungseinrichtung (21) zur Erkennung einer Anlagerung von Kalk an dem Kalkanlagerungsbereich (51) anhand der mindestens einen Temperatur vorgesehen ist.

2. Wasserführendes Haushaltsgerät nach dem vorstehenden Anspruch, **dadurch gekennzeichnet, dass** der Kalkablagerungsbereich (51) eine erste Oberflächenstruktur und der übrige Bereich (52) eine zweite Oberflächenstruktur aufweist, wobei die erste Oberflächenstruktur so ausgebildet ist, dass sie im Vergleich zu der zweiten Oberflächenstruktur eine Anlagerung von Kalk stärker begünstigt.

3. Wasserführendes Haushaltsgerät nach dem vorstehenden Anspruch, **dadurch gekennzeichnet, dass** die Rauheit der ersten Oberflächenstruktur höher als die Rauheit der zweiten Oberflächenstruktur ist.

4. Wasserführendes Haushaltsgerät nach einem der Ansprüche 2 oder 3, **dadurch gekennzeichnet, dass** Berge und Täler der zweiten Oberflächenstruktur abgerundeter ausgebildet sind als Berge und Täler der ersten Oberflächenstruktur.

5. Wasserführendes Haushaltsgerät nach einem der vorstehenden Ansprüche, **dadurch gekennzeichnet, dass** der Kalkanlagerungsbereich (51) eine die Neigung zur Anlagerung von in der Flüssigkeit (S) enthaltenem Kalk erhöhende Beschichtung (53) aufweist.

6. Wasserführendes Haushaltsgerät nach einem der vorstehenden Ansprüche, **dadurch gekennzeichnet, dass** der übrige Bereich (52) eine die Neigung zur Anlagerung von in der Flüssigkeit enthaltenem Kalk verringernde Beschichtung (54) aufweist.

7. Wasserführendes Haushaltsgerät nach einem der vorstehenden Ansprüche, **dadurch gekennzeichnet, dass** die Flächenleistung der Heizwiderstandsanordnung (24) an dem Kalkanlagerungsbereich (51) höher als an dem übrigen Bereich (52) ist.

8. Wasserführendes Haushaltsgerät nach einem der vorstehenden Ansprüche, **dadurch gekennzeichnet, dass** die Temperaturmessanordnung (35) einen in einem ersten Abstand (A1) von der Heizwiderstandsanordnung (24) angeordneten ersten Temperaturfühler (36) zur Messung einer ersten Temperatur der Wandung (23) und einen in einem zweiten Abstand (A2) von der Heizwiderstandsanordnung (24) angeordneten zweiten Temperaturfühler (37) zur Messung einer zweiten Temperatur der Wandung (23) aufweist, wobei der zweite Abstand (A2) größer als der erste Abstand (A1) ist.

9. Wasserführendes Haushaltsgerät nach vorstehendem Anspruch, **dadurch gekennzeichnet, dass** der erste Abstand (A1) wenigstens das Einfache einer Dicke der Wandung (23), bevorzugt das Zweifache der Dicke der Wandung (23), besonders bevorzugt das Dreifache der Dicke der Wandung (23), beträgt.

10. Wasserführendes Haushaltsgerät nach Anspruch 8 oder 9, **dadurch gekennzeichnet, dass** der zweite Abstand (A2) wenigstens das Zweifache des ersten Abstands (A1), bevorzugt das Dreifache des ersten Abstands (A1), besonders bevorzugt das Vierfache des ersten Abstands (A1) beträgt.

11. Wasserführendes Haushaltsgerät nach einem der Ansprüche 8 bis 10, **dadurch gekennzeichnet, dass** die Kalkerkennungseinrichtung (21) zur Erkennung einer Anlagerung von Kalk anhand einer Temperaturdifferenz aus der ersten Temperatur und der zweiten Temperatur ausgebildet ist.

12. Wasserführendes Haushaltsgerät nach einem der Ansprüche 8 bis 11, **dadurch gekennzeichnet, dass** die Kalkerkennungseinrichtung (21) eine Abschaltung der Heizeinrichtung (14) und bevorzugt eine Ausgabe einer Störungsmeldung (SM), bevorzugt über eine Bedienschnittstelle (20) des wasserführenden Haushaltsgerätes (19, initiiert, wenn die Temperaturdifferenz einen ersten Grenzwert (G1) übersteigt.

13. Wasserführendes Haushaltsgerät nach einem der Ansprüche 8 bis 12, **dadurch gekennzeichnet, dass** die Kalkerkennungseinrichtung (21) eine Ausgabe einer Bedienermeldung (BM), bevorzugt über eine Bedienschnittstelle (20) des wasserführenden Haushaltsgerätes (1), und bevorzugt eine Regenerierung (RG) einer Entkalkungseinrichtung (17) des wasserführenden Haushaltsgerätes (1), initiiert, wenn die Temperaturdifferenz einen zweiten Grenzwert (G2) übersteigt.

14. Wasserführendes Haushaltsgerät nach einem der Ansprüche 8 bis 13, **dadurch gekennzeichnet, dass** die Kalkerkennungseinrichtung (21) eine Regenerierung (RG) einer Entkalkungseinrichtung (17) des wasserführenden Haushaltsgerätes (1) initiiert, wenn die Temperaturdifferenz einen dritten Grenzwert (G3) übersteigt.

15. Wasserführendes Haushaltsgerät nach einem der Ansprüche 8 bis 14, **dadurch gekennzeichnet, dass** der erste Temperaturfühler (36) als erstes Widerstandsthermometer (36) und der zweite Temperaturfühler (37) als zweites Widerstandsthermometer (37) ausgebildet sind.

16. Wasserführendes Haushaltsgerät nach einem der Ansprüche 8 bis 15, **dadurch gekennzeichnet, dass** das erste Widerstandsthermometer (36) und das zweite Widerstandsthermometer (37) Teil einer Spannungsteileranordnung (36, 37) sind, an welche eine vorzugsweise von der Kalkerkennungseinrichtung (21) gelieferte konstante Spannung angelegt ist, wobei eine durch die Spannungsteileranordnung (36, 37) erzeugte Teilspannung mit der Differenz der ersten Temperatur und der zweiten Temperatur korreliert und zur Kalkerkennungseinrichtung (21) übertragen ist.

17. Verfahren zum Betreiben eines wasserführendes Haushaltsgeräts (1), insbesondere nach einem der vorstehenden Ansprüche, mit einer Heizeinrichtung (14), insbesondere mit einer Heizpumpe (14), zum Erwärmen einer wasserhaltigen Flüssigkeit (S), insbesondere einer wasserhaltigen Spülflüssigkeit (S), welche eine Wandung (23), insbesondere aus Edelstahl, aufweist, wobei eine erste Seite (22) der Wandung (23) mit einer Heizwiderstandsanordnung (24) sowie mit einer von der Heizwiderstandsanordnung (24) beabstandeten Temperaturmessanordnung (35) zur Messung wenigstens einer Temperatur der Wandung (23) ausgerüstet ist, und wobei eine gegenüberliegende zweite Seite (50) der Wandung (23) zum Führen der Flüssigkeit (S) vorgesehen ist, **dadurch gekennzeichnet, dass** auf der zweiten Seite (50) gegenüberliegend der Temperaturmessanordnung (35) ein Kalkanlagerungsbereich (51) ausgebildet wird, der eine höhere Neigung zur Anlagerung von in der Flüssigkeit (S) enthaltenem Kalk aufweist als ein übriger Bereich (52) der zweiten Seite (50), und dass eine Anlagerung von Kalk an dem Kalkanlagerungsbereich (51) anhand der mindestens einen Temperatur erkannt wird.

## Claims

1. Water-bearing household device, in particular household dishwasher (1), having a heating apparatus (14), in particular having a heat pump (14), for heating a liquid containing water (S), in particular a washing liquid containing water (S), which has a wall (23), in particular made of stainless steel, wherein a first side (22) of the wall (23) is equipped with a heating resistor arrangement (24) and with a temperature measuring arrangement (35) at a distance from the heating resistor arrangement (24) for measuring at least one temperature of the wall (23), and wherein an opposing second side (50) of the wall (23) is provided to guide the liquid (S), **characterised in that** embodied on the second side of the wall (23) that opposes the temperature measuring arrangement (35) is a limescale accumulation area (51) which has a greater tendency to accumulate limescale contained in the liquid (S) than a remaining area (52) of the second side (50), and that a limescale detection apparatus (21) is provided to detect an accumulation of limescale on the limescale accumulation area (51) on the basis of the at least one temperature.

2. Water-bearing household device according to the preceding claim, **characterised in that** the limescale deposit area (41) has a first surface structure and the remaining area (52) has a second surface structure, wherein the first surface structure is embodied such that compared with the second surface structure, it promotes an accumulation of limescale to a greater extent.

3. Water-bearing household device according to the preceding claim, **characterised in that** the roughness of the first surface structure is greater than the roughness of the second surface structure.

4. Water-bearing household device according to one of claims 2 or 3, **characterised in that** peaks and troughs of the second surface structure are embodied to be rounder than peaks and troughs of the first surface structure.

5. Water-bearing household device according to one of the preceding claims, **characterised in that** the limescale accumulation area (51) has a coating (53) which increases the tendency for limescale contained in the liquid (S) to accumulate.

6. Water-bearing household device according to one of the preceding claims, **characterised in that** the remaining area (52) has a coating (54) which reduces the tendency of limescale contained in the liquid to accumulate.

7. Water-bearing household device according to one of the preceding claims, **characterised in that** the area output of the heating resistor arrangement (24) on the limescale accumulation area (51) is higher than on the remaining area (52).

8. Water-bearing household device according to one of the preceding claims, **characterised in that** the temperature measuring arrangement (35) has a first temperature sensor (36) arranged at a first distance (A1) from the heating resistor arrangement (24) for measuring a first temperature of the wall (23) and a second temperature sensor (37) arranged at a second distance (A2) from the heating resistor arrangement (24) for measuring a second temperature of the wall (23), wherein the second distance (A2) is greater than the first distance (A1).

9. Water-bearing household device according to the preceding claim, **characterised in that** the first distance (A1) amounts to at least the thickness of the wall (23), preferably twice the thickness of the wall (23), particularly preferably three times the thickness of the wall (23).

10. Water-bearing household device according to claim 8 or 9, **characterised in that** the second distance (A2) amounts to at least twice the first distance (A1), preferably three times the first distance (A1), particularly preferably four times the first distance (A1).

11. Water-bearing household device according to one of claims 8 to 10, **characterised in that** the limescale detection apparatus (21) is embodied to detect an accumulation of limescale on the basis of a temperature difference between the first temperature and the second temperature.

12. Water-bearing household device according to one of claims 8 to 11, **characterised in that** the limescale detection apparatus (21) initiates a shutdown of the heating apparatus (14), and preferably an output of a warning message (SM), preferably by way of a user interface (20) of the water-bearing household device (19) if the temperature difference exceeds a first limit value (G1).

13. Water-bearing household device according to one of claims 8 to 12, **characterised in that** the limescale detection apparatus (21) initiates an output of an operator message (BM), preferably by way of a user interface (20) of the water-bearing household device (1), and preferably a regeneration (RG) of a decalcification apparatus (17) of the water-bearing household device (1) if the temperature difference exceeds a second limit value (G2).

14. Water-bearing household device according to one of claims 8 to 13, **characterised in that** the limescale detection apparatus (21) initiates a regeneration (RG) of a decalcification apparatus (17) of the water-bearing household device (1) if the temperature difference exceeds a third limit value (G3).

15. Water-bearing household device according to one of claims 8 to 14, **characterised in that** the first temperature sensor (36) and the second temperature sensor (37) are embodied as a first resistance thermometer (36) and a second resistance thermometer (37) respectively.

16. Water-bearing household device according to one of claims 8 to 15, **characterised in that** the first resistance thermometer (36) and the second resistance thermometer (37) are part of a voltage divider arrangement (36, 37), to which a constant voltage preferably supplied by the limescale detection apparatus (21) is applied, wherein a partial voltage generated by the voltage divider arrangement (36, 37) correlates with the difference between the first temperature and the second temperature and is transmitted to the limescale detection apparatus (21).

17. Method for operating a water-bearing household device (1), in particular according to one of the preceding claims, having a heating apparatus (14), in particular having a heat pump (14) for heating a liquid containing water (S), in particular a washing liquid containing water (S), which has a wall (23), in particular made of stainless steel, wherein a first side (22) of the wall (23) is equipped with a heating resistor arrangement (24) and with a temperature measuring arrangement (35) at a distance from the heating resistor arrangement (24) for measuring at least one temperature of the wall (23), and wherein an opposing second side (50) of the wall (23) is provided to guide the liquid (S), **characterised in that** embodied on the second side (50) of the wall (23) that opposes the temperature measuring arrangement (35) is a limescale accumulation area (51) which has a greater tendency to accumulate limescale contained in the liquid (S) than a remaining area (52) of the second side (50), and **in that** an accumulation of limescale on the limescale accumulation area (51) is detected on the basis of the at least one temperature.

## Revendications

1. Appareil ménager à circulation d'eau, notamment lave-vaisselle (1) à usage domestique, comprenant un dispositif de chauffage (14), comprenant notamment une pompe de chauffage (14) destinée à échauffer un liquide (S) contenant de l'eau, notamment un liquide de rinçage (S) contenant de l'eau, laquelle présente une paroi (23), notamment en acier inoxydable, un premier côté (22) de la paroi (23) étant équipé d'un dispositif de résistance de chauffage (24) ainsi que d'un dispositif de mesure de température (35) distancé du dispositif de résistance de chauffage (24), destiné à mesurer au moins une température de la paroi (23), et un deuxième côté (50) opposé de la paroi (23) étant ménagé pour guider le liquide (S), **caractérisé en ce que** sur le deuxième côté de la paroi (23) à l'opposé du dispositif de mesure de température (35) est réalisée une zone de dépôt de tartre (51) qui présente une inclinaison plus élevée pour le dépôt de tartre contenu dans le liquide (S) qu'une zone restante (52) du deuxième côté (50), et **en ce qu'**un dispositif d'identification de tartre (21) est ménagé pour identifier un dépôt de tartre sur la zone de dépôt de tartre (51) à l'aide de l'au moins une température.

2. Appareil ménager à circulation d'eau selon la revendication précédente, **caractérisé en ce que** la zone de dépôt de tartre (51) présente une première structure de surface et **en ce que** la zone restante (52) présente une deuxième structure de surface, la première structure de surface étant réalisée de manière à ce qu'elle favorise un dépôt de tartre de manière plus forte en comparaison avec la deuxième structure de surface.

3. Appareil ménager à circulation d'eau selon la revendication précédente, **caractérisé en ce que** la rugosité de la première structure de surface est plus élevée que la rugosité de la deuxième structure de surface.

4. Appareil ménager à circulation d'eau selon l'une quelconque des revendications 2 ou 3, **caractérisé en ce que** des crêtes et des creux de la deuxième structure de surface sont réalisés de manière plus arrondie que des crêtes et des creux de la première structure de surface.

5. Appareil ménager à circulation d'eau selon l'une quelconque des revendications précédentes, **caractérisé en ce que** la zone de dépôt de tartre (51) présente un revêtement (53) augmentant l'inclinaison pour le dépôt de tartre contenu dans le liquide (S).

6. Appareil ménager à circulation d'eau selon l'une quelconque des revendications précédentes, **caractérisé en ce que** la zone restante (52) présente un revêtement (54) diminuant l'inclinaison pour le dépôt de tartre contenu dans le liquide (S).

7. Appareil ménager à circulation d'eau selon l'une quelconque des revendications précédentes, **caractérisé en ce que** le rendement surfacique du dispositif de résistance de chauffage (24) sur la zone de dépôt de tartre (51) est plus élevé que sur la zone restante (52).

8. Appareil ménager à circulation d'eau selon l'une quelconque des revendications précédentes, **caractérisé en ce que** le dispositif de mesure de température (35) présente une première sonde de température (36) disposée avec un premier écart (A1) du dispositif de résistance de chauffage (24), destinée à mesurer une première température de la paroi (23), et une deuxième sonde de température (37), disposée avec un deuxième écart (A2) du dispositif de résistance de chauffage (24), destinée à mesurer une deuxième température de la paroi (23), le deuxième écart (A2) étant plus grand que le premier écart (A1).

9. Appareil ménager à circulation d'eau selon la revendication précédente, **caractérisé en ce que** le premier écart (A1) est au moins le simple d'une épaisseur de la paroi (23), de préférence le double de l'épaisseur de la paroi (23), de manière particulièrement préférée le triple de l'épaisseur de la paroi (23).

10. Appareil ménager à circulation d'eau selon la revendication 8 ou 9, **caractérisé en ce que** le deuxième écart (A2) est au moins le double du premier écart (A1), de préférence le triple du premier écart (A1), de manière particulièrement préférée le quadruple du premier écart (A1).

11. Appareil ménager à circulation d'eau selon l'une quelconque des revendications 8 à 10, **caractérisé en ce que** le dispositif d'identification de tartre (21) est réalisé pour identifier un dépôt de tartre à l'aide d'une différence de température obtenue à partir de la première température et de la deuxième température.

12. Appareil ménager à circulation d'eau selon l'une quelconque des revendications 8 à 11, **caractérisé en ce que** le dispositif d'identification de tartre (21) initie une mise hors fonction du dispositif de chauffage (14) et de préférence une sortie d'un message de défaut (SM), de préférence par l'intermédiaire d'une interface utilisateur (20) de l'appareil ménager (1) à circulation d'eau, lorsque la différence de température dépasse une première valeur limite (G1).

13. Appareil ménager à circulation d'eau selon l'une quelconque des revendications 8 à 12, **caractérisé en ce que** le dispositif d'identification de tartre (21) initie une sortie d'un message d'utilisateur (BM), de préférence par l'intermédiaire d'une interface utilisateur (20) de l'appareil ménager (1) à circulation d'eau, et de préférence une régénération (RG) d'un dispositif de détartrage (17) de l'appareil ménager (1) à circulation d'eau, lorsque la différence de température dépasse une deuxième valeur limite (G2).

14. Appareil ménager à circulation d'eau selon l'une quelconque des revendications 8 à 13, **caractérisé en ce que** le dispositif d'identification de tartre (21) initie une régénération (RG) d'un dispositif de détartrage (17) de l'appareil ménager (1) à circulation d'eau, lorsque la différence de température dépasse une troisième valeur limite (G3).

15. Appareil ménager à circulation d'eau selon l'une quelconque des revendications 8 à 14, **caractérisé en ce que** la première sonde de température (36) est réalisée comme premier thermomètre de résistance (36) et **en ce que** la deuxième sonde de température (37) est réalisée comme deuxième thermomètre de résistance (37).

16. Appareil ménager à circulation d'eau selon l'une quelconque des revendications 8 à 15, **caractérisé en ce que** le premier thermomètre de résistance (36) et le deuxième thermomètre de résistance (37) font partie d'un dispositif diviseur de tension (36, 37) sur lequel une tension constante fournie de préférence par le dispositif d'identification de tartre (21) est appliquée, une tension partielle générée par le dispositif diviseur de tension (36, 37) étant corrélée avec la différence entre la première température et la deuxième température et transmise vers le dispositif d'identification de tartre (21).

17. Procédé de fonctionnement d'un appareil ménager (1) à circulation d'eau, notamment selon l'une quelconque des revendications précédentes, comprenant un dispositif de chauffage (14), comprenant notamment une pompe de chauffage (14) destinée à échauffer un liquide (S) contenant de l'eau, notamment un liquide de rinçage (S) contenant de l'eau, laquelle présente une paroi (23), notamment en acier inoxydable, un premier côté (22) de la paroi (23) étant équipé d'un dispositif de résistance de chauffage (24) ainsi que d'un dispositif de mesure de température (35) distancé du dispositif de résistance de chauffage (24), destiné à mesurer au moins une température de la paroi (23), et un deuxième côté (50) opposé de la paroi (23) étant ménagé pour guider le liquide (S), **caractérisé en ce que** sur le deuxième côté (50) à l'opposé du dispositif de mesure de température (35) est réalisée une zone de dépôt de tartre (51) qui présente une inclinaison plus élevée pour le dépôt de tartre contenu dans le liquide (S) qu'une zone restante (52) du deuxième côté (50), et **en ce qu'**un dépôt de tartre sur la zone de dépôt de tartre (51) est identifié à l'aide de l'au moins une température.
